(19) Europäisches Patentamt — European Patent Office — Office européen des brevets

(11) **EP 3 237 510 B1**

(12) **EUROPÄISCHE PATENTSCHRIFT**

(45) Veröffentlichungstag und Bekanntmachung des Hinweises auf die Patenterteilung:
**26.07.2023   Patentblatt 2023/30**

(21) Anmeldenummer: **15813778.6**

(22) Anmeldetag: **15.12.2015**

(51) Internationale Patentklassifikation (IPC):
*C08J 9/36* (2006.01)    *B29C 44/56* (2006.01)
*C08J 9/232* (2006.01)    *C08J 9/16* (2006.01)
*C08J 9/14* (2006.01)    *C08J 9/12* (2006.01)
*C08J 9/00* (2006.01)    *B32B 5/18* (2006.01)
*B32B 5/24* (2006.01)    *B32B 7/08* (2019.01)

(52) Gemeinsame Patentklassifikation (CPC):
**B29B 9/12; B29C 44/3461; B29C 48/0012;
B29C 48/92; B32B 5/022; B32B 5/024; B32B 5/08;
B32B 5/18; B32B 5/20; B32B 5/245; B32B 27/065;
C08J 9/0061; C08J 9/122; C08J 9/141; C08J 9/16;**

(Forts.)

(86) Internationale Anmeldenummer:
**PCT/EP2015/079808**

(87) Internationale Veröffentlichungsnummer:
**WO 2016/102246 (30.06.2016 Gazette 2016/26)**

(54) **FASERVERSTÄRKTE FORMKÖRPER AUS EXPANDIERTEM PARTIKELSCHAUM**

FIBRE-REINFORCED MOULDINGS MADE FROM EXPANDED PARTICLE FOAM

ÉLÉMENTS MOULÉS RENFORCÉS À L'AIDE DE FIBRES EN MOUSSE PARTICULAIRE EXPANSÉE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **22.12.2014   EP 14199626**

(43) Veröffentlichungstag der Anmeldung:
**01.11.2017   Patentblatt 2017/44**

(73) Patentinhaber: **BASF SE**
**67056 Ludwigshafen (DE)**

(72) Erfinder:
• **RUCKDÄSCHEL, Holger**
**67487 St Martin (DE)**
• **TERRENOIRE, Alexandre**
**67071 Ludwigshafen (DE)**
• **ARBTER, Rene**
**67251 Freinsheim (DE)**
• **SAMPATH, Bangaru Dharmapuri Sriramulu**
**67063 Ludwigshafen (DE)**
• **GUTMANN, Peter**
**76199 Karlsruhe (DE)**
• **STOLL, Ragnar**
**49078 Osnabrueck (DE)**
• **HEBETTE, Christophe Leon Marie**
**Singapore 038987 (SG)**
• **STEIN, Robert**
**67122 Altrip (DE)**

(74) Vertreter: **BASF IP Association**
**BASF SE**
**GBI-C006**
**67056 Ludwigshafen (DE)**

(56) Entgegenhaltungen:
WO-A1-2006/125561      WO-A1-2013/184491
WO-A1-2016/066657      WO-A2-2010/091059
US-A- 3 030 256          US-B1- 6 291 049

(52) Gemeinsame Patentklassifikation (CPC): (Forts.)
**C08J 9/232; C08J 9/36;** B29B 9/065; B29C 44/352;
B29C 44/569; B29K 2105/12; B29L 2009/00;
B29L 2031/08; B32B 2260/021; B32B 2260/046;
B32B 2262/0269; B32B 2262/065; B32B 2262/101;
B32B 2262/103; B32B 2262/105; B32B 2262/106;
B32B 2262/14; B32B 2266/0214; B32B 2266/0228;
B32B 2266/025; B32B 2266/0264;
B32B 2266/0292; B32B 2266/08; B32B 2307/542;
B32B 2307/546; B32B 2307/581; B32B 2307/584;
B32B 2307/706; B32B 2307/718; B32B 2307/732;
B32B 2603/00; B32B 2605/00; B32B 2607/00;

C08J 2201/03; C08J 2201/034; C08J 2203/06;
C08J 2203/14; C08J 2203/202; C08J 2325/06;
C08J 2371/12; C08J 2425/06; C08J 2471/12

**Beschreibung**

Die vorliegende Erfindung betrifft einen Formkörper aus expandiertem Partikelschaumstoff, wobei sich mindestens eine Faser (F) teilweise innerhalb des Formkörpers befindet, also vom expandierten Partikelschaumstoff umschlossen ist. Die beiden nicht vom expandierten Partikelschaumstoff umschlossenen Enden der jeweiligen Faser (F) ragen somit aus jeweils einer Seite des entsprechenden Formkörpers heraus. Ein weiterer Gegenstand der vorliegenden Erfindung ist ein Paneel, das mindestens einen solchen Formkörper sowie mindestens eine weitere Schicht (S1) umfasst. Weitere Gegenstände der vorliegenden Erfindung sind Verfahren zur Herstellung der erfindungsgemäßen Formkörper aus expandiertem Partikelschaumstoff bzw. der erfindungsgemäßen Paneele sowie deren Verwendung, beispielsweise als Rotorblatt in Windenergieanlagen.

WO 2006/125561 betrifft ein Verfahren zur Herstellung von einem verstärkten zellulären Material, wobei in einem ersten Verfahrensschritt im zellulären Material mindestens ein Loch erzeugt wird, das sich von einer ersten Oberfläche zu einer zweiten Oberfläche des zellulären Materials erstreckt. Auf der anderen Seite der zweiten Oberfläche des zellulären Materials wird mindestens ein Faserbündel bereitgestellt, wobei dieses Faserbündel mit einer Nadel durch das Loch auf die erste Seite des zellulären Materials gezogen wird. Bevor die Nadel das Faserbündel fasst, wird die Nadel jedoch zunächst von der ersten Seite des zellulären Materials kommend durch das jeweilige Loch gezogen. Weiterhin befindet sich das Faserbündel mit Abschluss des Verfahrens gemäß WO 2006/125561 teilweise innerhalb des zellulären Materials, da es das entsprechende Loch ausfüllt, teilweise ragt das entsprechende Faserbündel auf den jeweiligen Seiten aus der ersten sowie zweiten Oberfläche des zellulären Materials heraus.

Durch das in WO 2006/125561 beschriebene Verfahren können sandwichartige Komponenten hergestellt werden, die einen Kern aus besagtem zellulären Material sowie mindestens ein Faserbündel umfassen. An den Oberflächen dieses Kernes können Harzschichten und faserverstärkte Harzschichten aufgebracht werden, um die eigentliche sandwichartige Komponente herzustellen. Als zelluläres Material zur Ausbildung des Kerns der sandwichartigen Komponente können beispielsweise Polyvinylchloride oder Polyurethane eingesetzt werden. Als Faserbündel kommen beispielsweise Kohlenstofffasern, Nylonfasern, Glasfasern oder Polyesterfasern in Frage.

WO 2006/125561 offenbart jedoch nicht, dass auch Partikelschäume als zelluläres Material zur Herstellung eines Kerns in einer sandwichartigen Komponente verwendet werden können. Die sandwichartigen Komponenten gemäß WO 2006/125561 eignen sich zur Verwendung im Flugzeugbau.

WO 2011/012587 betrifft ein weiteres Verfahren zur Herstellung eines Kerns mit integrierten Brückenfasern für Paneele aus Kompositmaterialien. Der Kern wird hergestellt, indem durch einen so genannten "Kuchen" aus Leichtmaterial die auf einer Oberfläche des entsprechenden Kuchens bereitgestellten Brückenfasern mit Hilfe einer Nadel teilweise oder vollständig durchgezogen werden. Der "Kuchen" kann aus Polyurethanschäumen, Polyesterschäumen, Polyethylenterephthalatschäumen, Polyvinylchloridschäumen oder einem phenolischen Schaum, insbesondere aus einem Polyurethanschaum ausgebildet sein. Als Fasern können prinzipiell jegliche Art von einfachen oder mehrfachen Fäden sowie sonstige Garne verwendet werden.

Die so hergestellten Kerne können wiederum Bestandteil eines Paneels aus Kompositmaterialien sein, wobei der Kern einseitig oder zweiseitig von einer Harzmatrix und Kombinationen aus Harzmatrizes mit Fasern in einer sandwichartigen Ausgestaltung umgeben ist. WO 2011/012587 offenbart jedoch nicht, dass Partikelschäume zur Herstellung des entsprechenden Kernmaterials eingesetzt werden können.

WO 2012/138445 betrifft ein Verfahren zur Herstellung eines Komposit-Kernpaneels unter Verwendung einer Vielzahl von länglichen Streifen aus einem zellulären Material mit einer niedrigen Dichte. Zwischen die jeweiligen Streifen wird eine doppellagige Fasermatte eingebracht, die unter Verwendung von Harz ein Verkleben der einzelnen Streifen unter Ausbildung der Komposit-Kernpaneele bewirkt. Das zelluläre Material mit niedriger Dichte, das die länglichen Streifen ausbildet, ist gemäß WO 2012/138445 ausgewählt aus Balsaholz, elastischen Schäumen oder faserverstärkten Kompositschäumen. Bei den doppellagig zwischen den einzelnen Streifen eingebrachten Fasermatten kann es sich beispielsweise um eine poröse Glasfasermatte handeln. Das als Kleber verwendete Harz kann beispielsweise ein Polyester, ein Epoxy- oder ein phenolisches Harz sein oder ein durch Wärme aktivierter Thermoplast, beispielsweise Polypropylen oder PET. WO 2012/138445 offenbart jedoch nicht, dass als zelluläres Material für die verlängerten Streifen auch ein Partikelschaum verwendet werden kann. Ebenso wenig ist darin offenbart, dass einzelne Fasern oder Faserbündel in das zelluläre Material zur Verstärkung eingebaut werden können. Gemäß WO 2012/138445 werden hierfür ausschließlich Fasermatten eingesetzt, die zudem ein Verbindungsglied im Rahmen einer Verklebung der einzelnen Streifen mittels Harz unter Erhalt des Kernmaterials darstellen.

GB-A 2 455 044 offenbart ein Verfahren zur Herstellung eines mehrschichtigen Kompositartikels, wobei in einem ersten Verfahrensschritt eine Vielzahl von Pellets aus thermoplastischem Material sowie einem Treibmittel bereitgestellt werden. Das thermoplastische Material ist ein Gemisch aus Polystyrol (PS) und Polyphenylenoxid (PPO), das mindestens 20 bis 70 Gew.-% PPO enthält. In einem zweiten Verfahrensschritt werden die Pellets expandiert und in einem dritten Schritt in einer Form unter Ausbildung eines geschlossenzelligen Schaums aus dem thermoplastischen Material zu einem Formkörper verschweißt, wobei der geschlossenzellige Schaum die Gestalt der Form annimmt. Im nächsten Verfahrensschritt wird auf die Oberfläche des geschlossenzelligen Schaums eine Schicht aus faserverstärktem Material aufgebracht, wobei die Anbindung der jeweiligen Oberflächen unter Verwendung von einem Epoxidharz durchgeführt wird. GB-A 2 455 044 offenbart jedoch nicht, dass Fasermaterial in den Kern des mehrschichtigen Kompositartikels eingebracht werden kann.

Ein sinngemäßes Verfahren bzw. ein sinngemäßer mehrschichtiger Kompositartikel (wie in GB-A 2 455 044) ist auch in WO 2009/047483 offenbart. Diese mehrschichtigen Kompositartikel eignen sich beispielsweise zur Verwendung von Rotorblättern (in Windturbinen) oder als Bootrumpf.

US-B 7,201,625 offenbart ein Verfahren zur Herstellung von Schaumprodukten sowie die Schaumprodukte als solche, die beispielsweise im Sportbereich als Surfbrett eingesetzt werden können. Den Kern des Schaumproduktes bildet ein Partikelschaum, beispielsweise auf Basis eines Polystyrolschaums. Dieser Partikelschaum wird in einer speziellen Form hergestellt, wobei eine Plastikaußenhaut den Partikelschaum umschließt. Die Plastikaußenhaut kann beispielsweise ein Polyethylenfilm sein. Auch US-B 7,201,625 offenbart jedoch nicht, dass im Partikelschaum Fasern zur Verstärkung des Materials enthalten sein können.

US-B 6,767,623 offenbart Sandwichpaneele, die eine Kernschicht aus Polypropylenpartikelschaum auf der Basis von Partikeln mit einer Partikelgröße im Bereich von 2 bis 8 mm und einer Schüttdichte im Bereich von 10 bis 100 g/l aufweisen. Weiterhin umfassen die Sandwichpaneele zwei Deckschichten aus faserverstärktem Polypropylen, wobei die einzelnen Deckschichten so um den Kern angeordnet sind, dass ein Sandwich ausgebildet wird. Gegebenenfalls können noch weitere Schichten zu dekorativen Zwecken in den Sandwichpaneelen enthalten sein. Die Deckschichten können Glasfasern oder sonstige Polymerfasern enthalten.

EP-A 2 420 531 offenbart Extrusionsschaumstoffe auf Basis eines Polymers wie Polystyrol, in denen mindestens ein mineralischer Füllstoff mit einer Partikelgröße von $\leq 10\ \mu m$ und mindestens ein Keimbildner enthalten sind. Diese Extrusionsschaumstoffe zeichnen sich durch ihre verbesserte Steifigkeit aus. Weiterhin wird ein entsprechendes Extrusionsverfahren zur Herstellung solcher Extrusionsschaumstoffe auf Basis von Polystyrol beschrieben. Die Extrusionsschaumstoffe können geschlossenzellig sein.

WO 2005/056653 betrifft Partikelschaumstoffformteile aus expandierbaren, Füllstoff enthaltenden Polymergranulaten. Die Partikelschaumstoffformteile sind erhältlich durch Verschweißen von vorgeschäumten Schaumpartikeln aus expandierbaren, Füllstoff enthaltenden, thermoplastischen Polymergranulaten, wobei der Partikelschaumstoff eine Dichte im Bereich von 8 bis 300 g/l aufweist. Bei den thermoplastischen Polymergranulaten handelt es sich insbesondere um ein Styrolpolymer. Als Füllstoff können pulverförmige anorganische Stoffe, Metall, Kreide, Aluminiumhydroxid, Kalziumcarbonat oder Tonerde oder kugel- oder faserförmige anorganische Stoffe wie Glaskugeln, Glasfasern oder Kohlefasern eingesetzt werden.

US 3,030,256 betrifft laminierte Paneele, zu deren Herstellung ein Kern, der aus einem Schaumstoff oder einem expandierten Polymer hergestellt ist, mit Fasern verstärkt wird. Als Material für den Kern sind expandiertes und extrudiertes Polystyrol sowie Phenole, Epoxide und Polyurethane beschrieben. Zum Einbringen der Fasern wird mit einer Nadel von der ersten Seite des Kerns zur zweiten Seite des Kerns ein Loch erzeugt und mit derselben Nadel ein Faserbündel von der zweiten Seite auf die erste Seite durch das Loch gezogen, sodass sich das Faserbündel teilweise innerhalb des Kerns befindet und teilweise zur ersten und zur zweiten Seite hinausragt. Das Fasermaterial wird in einem Winkel von 0° relativ zur Dickenrichtung des Kerns in den Kern eingebracht.

Die der vorliegenden Erfindung zugrundeliegende Aufgabe besteht in der Bereitstellung von neuen faserverstärkten Formkörpern bzw. Paneelen.

Gelöst wird diese Aufgabe erfindungsgemäß durch einen Formkörper aus expandiertem Partikelschaumstoff, dadurch gekennzeichnet, dass die Oberfläche von mindestens einer Seite des Formkörpers mindestens eine Vertiefung aufweist und dass mindestens eine Faser (F) sich mit einem Faserbereich (FB2) innerhalb des Formkörpers befindet und von dem expandierten Partikelschaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei die Faser (F) in einem Winkel $\alpha$ von 10 bis 70° relativ zur Dickenrichtung (d) des Formkörpers in den expandierten Partikelschaumstoff eingebracht ist, wobei der Faserbereich (FB1) und der Faserbereich (FB3) jeweils unabhängig voneinander 1 bis 45 % und der Faserbereich (FB2) 10 bis 98 % der Gesamtlänge der Faser (F) ausmachen, wobei zwei oder mehr Fasern (F) in einem Winkel $\beta$ zueinander in dem Formkörper vorliegen, wobei der Winkel $\beta$ im Bereich $\beta$ = 360°/n liegt, wobei n eine ganzzahlige Zahl ist und im Bereich von 2 bis 6 liegt.

Verwandte Formkörper werden offenbart in US 6,291,049, in WO 2010/091059 und in WO 2013/184491.

Die erfindungsgemäßen Formkörper zeichnen sich in vorteilhafter Weise dadurch aus, dass aufgrund der Verwendung von expandierten Partikelschaumstoffen eine geringe Harzaufnahme bei gleichzeitig guter Grenzflächenanbindung festzustellen ist. Dieser Effekt ist insbesondere dann von Bedeutung, wenn die erfindungsgemäßen Formkörper zu den erfindungsgemäßen Paneelen weiterverarbeitet werden.

Eine weitere Verbesserung der Anbindung bei gleichzeitig reduzierter Harzaufnahme wird erfindungsgemäß durch die Faserverstärkung der expandierten Partikelschaumstoffe in den erfindungsgemäßen Formkörpern bzw. den daraus resultierenden Paneelen ermöglicht. Erfindungsgemäß können die Fasern (einzeln oder vorzugsweise als Faserbündel) in vorteilhafter Weise zunächst trocken und/oder durch mechanische Prozesse in den expandierten Partikelschaum eingebracht werden. Die Fasern bzw. Faserbündel werden an den jeweiligen Partikelschaumstoffoberflächen nicht bündig, sondern mit Überstand abgelegt und ermöglichen damit eine verbesserte Anbindung bzw. eine direkte Verbindung mit den entsprechenden Decklagen im erfindungsgemäßen Paneel. Dies ist insbesondere dann der Fall, wenn als Decklage erfindungsgemäß mindestens eine weitere Schicht (S1) unter Ausbildung eines Paneels auf die erfindungsgemäßen Formkörper aufgebracht wird. Vorzugsweise werden zwei Schichten (S1), die gleich oder verschieden sein können, aufgebracht. Besonders bevorzugt werden zwei gleiche Schichten (S1), insbesondere zwei gleiche faserverstärkte Harzschichten, auf einander gegenüberliegenden Seiten des erfindungsgemäßen Formkörpers unter Ausbildung eines erfindungsgemäßen Paneels aufgebracht. Solche Paneele werden auch als "Sandwichmaterialien" bezeichnet, wobei der erfindungsgemäße Formkörper auch als "Kernmaterial" bezeichnet werden kann.

Die erfindungsgemäßen Paneele zeichnen sich somit durch eine geringe Harzaufnahme in Verbindung mit einer guten Schälfestigkeit aus. Weiterhin sind hohe Festigkeits- und Steifigkeitseigenschaften gezielt durch die Wahl der Fasertypen, deren Anteil und Anordnung einstellbar. Der Effekt einer geringen Harzaufnahme ist deswegen von Bedeutung, weil beim Einsatz von solchen Paneelen (Sandwichmaterialien) häufig das Ziel besteht, dass die strukturellen Eigenschaften bei möglichst geringem Gewicht erhöht werden sollen. Beim Einsatz von beispielsweise faserverstärkten Decklagen trägt neben den eigentlichen Decklagen und dem Sandwichkern die Harzaufnahme des Kernmaterials zum Gesamtgewicht bei. Durch die erfindungsgemäßen Formkörper bzw. die erfindungsgemäßen Paneele kann die Harzaufnahme jedoch verringert werden, wodurch Gewicht sowie Kosten eingespart werden können.

Ein weiterer Vorteil der erfindungsgemäßen Formkörper bzw. Paneele ist darin zu sehen, dass aufgrund der Verwendung von Partikelschäumen bzw. der damit verbundenen Herstellung das Anbringen von integrierten Strukturen wie Schlitze oder Löcher auf den Oberflächen der Formkörper sowie die Weiterverarbeitung der Formkörper relativ einfach ist. Derartige Strukturen werden beim Einsatz von solchen Formkörpern (Kernmaterialien) beispielsweise häufig zum Drapieren in gekrümmte Strukturen (tiefe Schlitze), zur Verbesserung der Verarbeitbarkeit durch Flüssigharzprozesse wie der Vakuuminfusion (Löcher) und zur Beschleunigung der genannten Verarbeitungsprozess (flache Schlitze) eingebracht.

Weitere Verbesserungen/Vorteile werden dadurch erzielt, dass die Fasern in einem Winkel $\alpha$ im Bereich von 10 bis 70° in Bezug zur Dickenrichtung (d) des expandierten Partikelschaumstoffs in den expandierenden Partikelschaumstoff eingebracht werden, besonders bevorzugt von 30 bis 50° . Generell ist das Einbringen der Fasern in einem Winkel $\alpha$ von 0°bis < 90° technisch durchführbar.

Zusätzliche Verbesserungen/Vorteile werden dadurch erzielt, dass die Fasern nicht nur parallel zueinander in den expandierten Partikelschaumstoffs eingebracht werden, sondern weitere Fasern in einen Winkel $\beta$ zueinander.

Dadurch wird zusätzlich eine Verbesserung der mechanischen Eigenschaften des erfindungsgemäßen Formkörpers erzielt.

Ebenso ist es von Vorteil, wenn in den erfindungsgemäßen Paneelen die Harz(deck)schicht durch Flüssiginjektionsverfahren oder Flüssiginfusionsverfahren aufgebracht wird, bei dem die Fasern während der Verarbeitung mit Harz getränkt und die mechanischen Eigenschaften verbessert werden können. Zudem können dadurch Kosten eingespart werden.

Unter dem Begriff "geschlossene Oberfläche" wird im Rahmen der vorliegenden Erfindung Folgendes verstanden: Die geschlossene Oberfläche wird durch licht- oder elektronenmikroskopische Aufnahmen ausgewertet. Anhand von Bildanalyse wird der Flächenanteil der geöffneten Schaumzellen bezogen auf die Gesamtoberfläche bewertet. Schäume mit geschlossener Oberfläche sind definiert als: (1 - Flächenanteil der geöffneten Schaumzellen) / Gesamtoberfläche > 30 %, vorzugsweise > 50 %, mehr bevorzugt > 80 %, insbesondere > 95 %.

Nachfolgend wird die vorliegende Erfindung weiter präzisiert.

Erfindungsgemäß umfasst der Formkörper einen expandierten Partikelschaumstoff und mindestens ein Faser (F).

Expandierte Partikelschaumstoffe sind dem Fachmann als solche bekannt. Geeignete expandierte Partikelschaumstoffe sind beispielsweise auf Basis von mindestens einem Polymer, das ausgewählt ist aus Polystyrol, Polyphenylenoxid, einem aus Phenylenoxid hergestellten Copolymer, einem aus Styrol hergestellten Copolymer, Polysulfon, Polyethersulfon, Polypropylen, Polyethylen, Polyamid, Polycarbonat, Polyacrylat, Polymilchsäure, Polyimid, Polyvinylidendifluorid oder ein Gemisch davon. Vorzugsweise ist das Polymer ausgewählt aus Polystyrol, Polyphenylenoxid, einem Gemisch aus Polystyrol und Polyphenylenoxid, einem aus Styrol hergestellten Copolymer, einem Gemisch aus aus Styrol hergestellten Copolymeren oder einem Gemisch aus Polycarbonat mit anderen Polymeren. Als expandierte Partikelschaumstoffe sind außerdem thermoplastische Elastomere geeignet. Thermoplastische Elastomere sind dem Fachmann als solche bekannt.

Polyphenylenoxid ist vorzugsweise Poly(2,6-dimethyl phenylenether), das auch als Poly(2,6-dimethyl phenylenoxid) bezeichnet wird.

Geeignete aus Phenylenoxid hergestellte Copolymere sind dem Fachmann bekannt.

Geeignete Comonomere zu Phenylenoxid sind dem Fachmann ebenfalls bekannt.

Ein aus Styrol hergestelltes Copolymer weist vorzugsweise als Comonomer zu Styrol ein Monomer auf, das ausgewählt ist aus $\alpha$-Methylstyrol, kernhalogenierten Styrolen, kernalkylierten Styrolen, Acrylnitril, Acrylsäureester, Methacrylsäureester N-Vinylverbindungen, Maleinsäureanhydrid, Butadien, Divinylbenzol oder Butandioldiacrylat.

Besonders bevorzugt ist das Polymer, auf dessen Basis der expandierte Partikelschaumstoff ist, Polystyrol, ein Gemisch aus Polystyrol und Poly(2,6-dimethyl phenylenoxid) oder ein Styrol-Maleinsäureanhydrid-Polymer (SMA).

Der expandierte Partikelschaumstoff des Formkörpers kann nach allen dem Fachmann bekannten Verfahren hergestellt werden.

In einer bevorzugten Ausführungsform wird der expandierte Partikelschaumstoff des Formkörpers durch ein Verfahren umfassend die folgenden Schritte I) bis V) hergestellt:

I) Herstellung von expandierbaren Polymerpartikeln aus dem entsprechenden Polymer in Gegenwart eines Treibmittels bei erhöhter Temperatur, vorzugsweise als Polymerschmelze und/oder durch Extrusion,

II) gegebenenfalls Abkühlen und/oder Entspannen der treibmittelbeladenen expandierbaren Polymerpartikel, gegebenenfalls mit Expansion der Polymerpartikel zu vorgeschäumten teilexpandierten Polymerpartikeln,

III) gegebenenfalls Vorschäumen der expandierbaren Polymerpartikel und/oder gegebenenfalls der teilexpandierten Polymerpartikel bei erhöhter Temperatur im Bereich von 95 bis 150 °C, bevorzugt im Bereich von 100 bis 140 °C und besonders bevorzugt im Bereich von 105 bis 130 °C und/oder bei geringen Drücken im Bereich von 1 bis 5 bar, bevorzugt im Bereich von 1,1 bis 3,6 bar und besonders bevorzugt im Bereich von 1,3 bis 2,8 bar in Gegenwart von Wasserdampf oder eines Wasserdampf/Luft-Gemisches unter Erhalt von expandierten Partikeln,

IV) Einbringen der teilexpandierten Polymerpartikel aus Schritt II) und/oder der expandierten Partikel aus Schritt III) in ein formgebendes Werkzeug,

V) Beaufschlagung der teilexpandierten Polymerpartikel aus Schritt II) und/oder der expandierten Partikel aus Schritt III) mit Wasserdampf bei erhöhtem Druck im Bereich von 1 bis 25 bar, bevorzugt im Bereich von 1,1 bis 8 bar und besonders bevorzugt im Bereich von 1,5 bis 4 bar und/oder erhöhter Temperatur im Bereich von 100 bis 220 °C, bevorzugt im Bereich von 102 bis 170 °C und besonders bevorzugt im Bereich von 110 bis 140 °C im formgebenden Werkzeug unter Erhalt der Formkörper aus expandiertem Partikelschaumstoff.

Die Beaufschlagung mit Wasserdampf in Schritt V) kann beispielsweise durch Querbedampfung und/oder durch Autoklavbedampfung erfolgen.

Als Treibmittel in Schritt I) eignen sich prinzipiell alle dem Fachmann bekannten Treibmittel. Beispielsweise kann das Treibmittel ausgewählt sein aus der Gruppe der Alkane wie Pentan oder Butan, der Gruppe der Alkohole wie Ethanol, Kohlenstoffdioxid, Stickstoff, Wasser und Kombinationen aus diesen.

In einer weiteren bevorzugten Ausführungsform werden die Partikel zur Herstellung des expandierten Partikelschaumstoffs des Formkörpers durch ein Suspensionsverfahren, ein Schmelzimprägnierverfahren, ein Schmelzeexpandierverfahren oder ein Kesselexpandierverfahren hergestellt.

Diese Verfahren sind dem Fachmann als solche bekannt.

Beispielsweise umfasst ein Suspensionsverfahren die folgenden Schritte:

I1) Herstellung von expandierbaren Polymerpartikeln aus dem entsprechenden Polymer oder Polymergemisch in Gegenwart eines Treibmittels in einem druckbeaufschlagten Kessel bei erhöhter Temperatur, wobei die Herstellung während der Polymerisation des entsprechenden Polymers oder Polymergemischs erfolgt,

II1) Abkühlen und/oder Entspannen der treibmittelbeladenen expandierbaren Polymerpartikel, gegebenenfalls mit Expansion der Polymerpartikel zu teilexpandierten Polymerpartikeln,

III1) Vorschäumen der expandierbaren Polymerpartikel und/oder gegebenenfalls der teilexpandierten Polymerpartikel bei erhöhter Temperatur und/oder bei geringen Drücken in Gegenwart von Wasserdampf unter Erhalt von expandierten Partikeln,

IV1) Einbringen der expandierten Partikel aus Schritt III1) in ein formgebendes Werkzeug,

V1) Beaufschlagung der expandierten Partikel aus Schritt III1) mit Wasserdampf bei erhöhtem Druck und/oder erhöhter Temperatur im formgebenden Werkzeug unter Erhalt der Formkörper aus expandiertem Partikelschaumstoff.

Die Herstellung während der Polymerisation des entsprechenden Polymers oder Polymergemischs in Verfahrensschritt 11) kann während allen dem Fachmann bekannten Polymerisationen, erfolgen. Beispielsweise kann die Herstellung während der Polymerisation des Polymers oder Polymergemisches in einem Lösungsmittel ausgehend von Monomeren erfolgen, die in dem Lösungsmittel unlöslich sind, und/oder ohne Lösungsmittel, ausgehend von Monomeren, die in dem entsprechenden Polymer oder Polymergemisch suspendiert vorliegen, und dieses quellen und dann polymerisiert werden.

Die Temperatur in Verfahrensschritt 11) liegt vorzugsweise im Bereich von 50 °C bis 400 °C, besonders bevorzugt im Bereich von 100 °C bis 200 °C , insbesondere bevorzugt im Bereich von 100 °C bis 150 °C und/oder der Druck in Verfahrensschritt 11) liegt vorzugsweise im Bereich von 5 bis 500 bar, besonders bevorzugt im Bereich von 50 bis 300 bar, insbesondere bevorzugt im Bereich von 100 bis 200 bar.

Für den Druck und die Temperatur in Verfahrensschritt V1) gelten die zuvor für Verfahrensschritt VI) beschriebenen Ausführungen und Bevorzugungen.

Ein Schmelzimprägnierverfahren umfasst beispielsweise die folgenden Schritte:

I2) Herstellung von expandierbaren Polymerpartikeln aus der entsprechenden treibmittelbeladenen Polymerschmelze durch Gegenwart mindestens eines Treibmittels in der Polymerschmelze während des Extrusionsverfahrens bei hohen Drücken und hohen Temperaturen,

II2) Durchführung einer Granulierung bei einem Schmelzedüsendruck im Bereich von 80 bis 300 bar, vorzugsweise im Bereich von 130 bis 200 bar, vorzugsweise Durchführung einer Unterwassergranulierung der expandierbaren Polymerpartikel bei einer Temperatur des durchströmenden Mediums Wasser im Bereich von 15 °C bis 80 °C, besonders bevorzugt im Bereich von 30 °C bis 60 °C und insbesondere bevorzugt im Bereich von 40 °C bis 50 °C und einem Druck des durchströmenden Mediums Wasser im Bereich von 1 bis 25 bar, bevorzugt im Bereich von 5 bis 20 bar, insbesondere bevorzugt im Bereich von 8 bis 15 bar, gegebenenfalls mit Expansion der Polymerpartikel zu teilexpandierten Polymerpartikeln,

III2) Vorschäumen der expandierbaren Polymerpartikel und/oder gegebenenfalls der teilexpandierten Polymerpartikel bei erhöhter Temperatur und/oder bei geringen Drücken in Gegenwart von Wasserdampf unter Erhalt von expandierten Partikeln,

IV2) Einbringen der expandierten Partikel aus Schritt III2) in ein formgebendes Werkzeug,

V2) Beaufschlagung der expandierten Partikel aus Schritt III2) mit Wasserdampf bei erhöhtem Druck und/oder erhöhter Temperatur im formgebenden Werkzeug unter Erhalt der Formkörper aus expandiertem Partikelschaumstoff.

Der Verfahrensschritt I2) kann in einem Extruder, in einem statischen Schmelzemischer, in einem dynamischen Schmelzemischer, in einem Wärmetauscher oder in Kombinationen daraus stattfinden. Die Temperatur während Verfahrensschritt I2) liegt vorzugsweise im Bereich von 100 bis 450 °C, besonders bevorzugt im Bereich von 150 bis 300 °C, insbesonders bevorzugt im Bereich von 150 bis 280 °C und/oder der Druck in Verfahrensschritt I2) liegt vorzugsweise im Bereich von 40 bis 300 bar, besonders bevorzugt im Bereich von 75 bis 250 bar und insbesonders bevorzugt im Bereich von 80 bis 200 bar.

Für den Druck und die Temperatur in Verfahrensschritt V2) gelten die zuvor für Verfahrensschritt VI) beschriebenen Ausführungen und Bevorzugungen.

Das Schmelzeexpandierverfahren umfasst üblicherweise die folgenden Schritte:

I3) Herstellung von expandierbaren Polymerpartikeln aus einer treibmittelbeladenen Polymerschmelze durch Gegenwart mindestens eines Treibmittel in der Polymerschmelze während des Extrusionsverfahrens bei hohen Drücken und hohen Temperaturen,

II3) Entspannen der treibmittelbeladenen Polymerschmelze mit Expansion der Polymerschmelze gegebenenfalls nach vorherigem Abkühlen, gegebenenfalls Entspannen durch Austritt aus einer Düse gegen Atmosphärendruck oder in einer Granulierkammer zur Unterwassergranulierung mit einem Druck des durchströmenden Mediums Wasser im Bereich von 1 bis 25 bar, bevorzugt im Bereich von 5 bis 20 bar, insbesondere bevorzugt im Bereich von 8 bis 15 bar und einer Temperatur des durchströmenden Mediums Wasser im Bereich von 15 bis 80 °C, besonders bevorzugt im Bereich von 30 bis 60 °C, insbesondere bevorzugt im Bereich von 40 bis 50 °C,

III3) Granulierung der expandierten Polymerschmelze zu expandierten Partikeln, gegebenenfalls in der Granulierkammer,

IV3) Einbringen der expandierten Partikel aus Schritt III3) in ein formgebendes Werkzeug,

V3) Beaufschlagung der granulierten Partikel aus Schritt III3) mit Wasserdampf bei erhöhtem Druck und/oder erhöhter Temperatur im formgebenden Werkzeug unter Erhalt der Formkörper aus expandiertem Partikelschaumstoff.

Der Verfahrensschritt I3) kann in einem Extruder, in einem statischen Schmelzemischer, in einem dynamischen Schmelzemischer, in einem Wärmetauscher oder in Kombinationen daraus stattfinden. Die Temperatur während Verfahrensschritt I3) liegt vorzugsweise im Bereich von 100 bis 450 °C, besonders bevorzugt im Bereich von 150 bis 300 °C, insbesonders bevorzugt im Bereich von 150 bis 280 °C und/oder der Druck in Verfahrensschritt I3) liegt vorzugsweise im Bereich von 40 bis 300 bar, besonders bevorzugt im Bereich von 75 bis 250 bar und insbesonders bevorzugt im Bereich von 80 bis 200 bar.

Für den Druck und die Temperatur in Verfahrensschritt V3) gelten die zuvor für Verfahrensschritt VI) beschriebenen Ausführungen und Bevorzugungen.

In einer Ausführungsform umfasst das Kesselexpandierverfahren die folgenden Schritte:

I4) Herstellung von expandierbaren Polymerpartikeln aus dem entsprechenden Polymer in Gegenwart eines Treibmittels bei erhöhter Temperatur in einem druckbeaufschlagten Kessel, wobei das entsprechende Polymer als vorgeformtes Partikel, als zu polymerisierende Masse oder als bereits polymerisierte Masse vorliegt,

II4) Abkühlen und/oder Entspannen der treibmittelbeladenen expandierbaren Polymerpartikel, gegebenenfalls mit Expansion der Polymerpartikel zu teilexpandierten Polymerpartikeln,

III4) Einbringen der teilexpandierten Polymerpartikel aus Schritt II4) in ein formgebendes Werkzeug,

IV4) Beaufschlagung der teilexpandierten Polymerpartikel aus Schritt II4) mit Wasserdampf bei erhöhtem Druck und/oder erhöhter Temperatur im formgebenden Werkzeug unter Erhalt der Formkörper aus expandiertem Partikelschaumstoff.

Die Temperatur während Verfahrensschritt I4) liegt vorzugsweise im Bereich von 50 bis 400 °C, besonders bevorzugt im Bereich von 100 bis 250 °C, insbesondere bevorzugt im Bereich von 140 °C bis 200 °C und/oder der Druck in Verfahrensschritt I4) liegt vorzugsweise im Bereich von 5 bis 400 bar, besonders bevorzugt im Bereich von 40 bis 200 bar und insbesondere bevorzugt im Bereich von 60 bis 150 bar.

Für den Druck und die Temperatur in Verfahrensschritt IV4) gelten die zuvor für Verfahrensschritt VI) beschriebenen Ausführungen und Bevorzugungen.

In einer Ausführungsform der vorliegenden Erfindung hat der expandierte Partikelschaumstoff eine Dichte im Bereich von 10 bis 250 g/l, bevorzugt im Bereich von 25 bis 150 g/l und insbesondere bevorzugt im Bereich von 30 bis 100 g/l.

Die im Formkörper enthaltene Faser (F) ist eine einzelne Faser oder ein Faserbündel, vorzugsweise ein Faserbündel. Als Faser (F) eignen sich alle dem Fachmann bekannten Materialien, die Fasern bilden können. Beispielsweise ist die Faser (F) eine organische, anorganische, metallische, keramische Faser oder eine Kombination daraus, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser, eine polymere Faser ist vorzugsweise eine Faser aus Polyester, Polyamid, Polyaramid, Polyethylen, Polyurethan, Polyvinylchlorid, Polyimid und/oder Polyamidimid, eine Naturfaser ist vorzugsweise eine Faser aus Sisal, Hanf, Flachs, Bambus, Kokos und/oder Jute.

In einer bevorzugten Ausführungsform werden Faserbündel eingesetzt. Die Faserbündel setzen sich aus mehreren einzelnen Fasern (Filamenten) zusammen. Die Anzahl der Einzelfasern pro Bündel beträgt mindestens 10, bevorzugt 100 bis 100 000, besonders bevorzugt 300 bis 10 000 bei Glasfasern und 1000 bis 50 000 bei Kohlenstofffasern, und insbesondere bevorzugt 500 bis 5 000 bei Glasfasern und 2000 bis 20 000 bei Kohlenstofffasern.

Erfindungsgemäß befindet sich die mindestens eine Faser (F) mit einem Faserbereich (FB2) innerhalb des Formkörpers und ist von dem expandierten Partikelschaumstoff umschlossen, während ein Faserbereich (FB1) der Faser (F) aus einer ersten Seite des Formkörpers herausragt und ein Faserbereich (FB3) der Faser (F) aus einer zweiten Seite des Formkörpers herausragt.

Erfindungsgemäß machen der Faserbereich (FB1) und der Faserbereich (FB3) jeweils unabhängig voneinander 1 bis 45 %, vorzugsweise 2 bis 40 % und besonders bevorzugt 5 bis 30 %, und der Faserbereich (FB2) 10 bis 98 %, vorzugsweise 20 bis 96 %, besonders bevorzugt 40 bis 90 % der Gesamtlänge der Faser (F) aus.

In einer weiteren bevorzugten Ausführungsform liegt die erste Seite des Formkörpers, aus der der Faserbereich (FB1) der Faser (F) herausragt, der zweiten Seite des Formkörpers gegenüber, aus der der Faserbereich (FB3) der Faser (F) herausragt.

Die Faser (F) ist in einem Winkel $\alpha$ von 10 bis 70° relativ zu Dickenrichtung (d) des Formkörpers bzw. zur Orthogonalen (der Oberfläche) der ersten Seite (2) des Formkörpers in den Formkörper eingebracht. Bevorzugt ist die Faser (F) in einem Winkel $\alpha$ von 30 bis 60°, vorzugsweise von 30 bis 50°, noch mehr bevorzugt von 30 bis 45°, insbesondere von 45°, relativ zur Dickenrichtung (d) des Formkörpers in den expandierten Partikelschaumstoff eingebracht.

In einer weiteren Ausführungsform werden zumindest zwei Fasern (F) in zwei unterschiedlichen Winkeln $\alpha$, $\alpha_1$ und $\alpha_2$, eingebracht, wobei der Winkel $\alpha_1$ vorzugsweise im Bereich von 0° bis 15° und der zweiten Winkel $\alpha_2$ vorzugsweise im Bereich von 30 bis 50° liegt, insbesondere bevorzugt liegt $\alpha_1$ im Bereich von 0° bis 5° und $\alpha_2$ im Bereich von 40 bis 50°.

Bevorzugt werden alle Fasern (F) in einem Winkel $\alpha$ im Bereich von 10 bis 70°, bevorzugt von 30 bis 60°, insbesondere bevorzugt von 30 bis 50°, noch mehr bevorzugt von 30 bis 45°, am meisten bevorzugt von 45°, relativ zur Dickenrichtung (d) des Formkörpers in den expandierten Partikelschaumstoff eingebracht.

Es ist darüber hinaus bevorzugt, dass außer der mindestens einen Faser (F) keine weitere Faser in den expandierten Partikelschaumstoff eingebracht wird.

Vorzugsweise enthält ein erfindungsgemäßer Formkörper eine Vielzahl von Fasern (F), vorzugsweise als Faserbündel, und/oder umfasst mehr als 10 Fasern (F) oder Faserbündel pro m$^2$, bevorzugt mehr als 1000 pro m$^2$, besonders bevorzugt 4000 bis 40 000 pro m$^2$. Vorzugsweise weisen sämtliche Fasern (F) im erfindungsgemäßen Formkörper den gleichen Winkel $\alpha$ oder zumindest einen annähernd gleichen Winkel (Abweichung von maximal +/- 5°, vorzugsweise +/- 2°, besonders bevorzugt +/- 1°) auf.

Erfindungsgemäß liegen zwei oder mehr Fasern (F) in einem Winkel $\beta$ zueinander in dem Formkörper vor. Unter dem Winkel $\beta$ wird im Rahmen der vorliegenden Erfindung der Winkel zwischen der senkrechten Projektion einer ersten Faser (F1) auf die Oberfläche der ersten Seite des Formkörpers und der senkrechten Projektion einer zweiten Faser (F2) auf die Oberfläche des Formkörpers verstanden, wobei beide Fasern in den Formkörper eingebracht sind.

Der Winkel $\beta$ liegt im Bereich $\beta$ = 360°/n, wobei n eine ganzzahlige Zahl ist und n im Bereich von 2 bis 6, besonders bevorzugt im Bereich von 2 bis 4 liegt. Beispielsweise liegt der Winkel $\beta$ bei 90°, 120° oder 180°. In einer weiteren Ausführungsform werden mehr als zwei Fasern (F) in einem Winkel $\beta$ zueinander eingebracht, beispielsweise drei oder vier Fasern (F). Diese drei oder vier Fasern (F) können jeweils zu den beiden benachbarten Fasern zwei unterschiedliche Winkel $\beta$, $\beta$, und $\beta_2$, aufweisen. Bevorzugt weisen alle Fasern (F) zu den beiden benachbarten Fasern (F) die gleichen Winkel $\beta=\beta_1=\beta_2$ auf. Beispielsweise beträgt der Winkel $\beta$ 90°, dann beträgt der Winkel $\beta$, zwischen der ersten Faser (F1) und der zweiten Faser (F2) 90°, der Winkel $\beta_2$ zwischen der zweiten Faser (F2) und dritten Faser (F3) 90°, der Winkel $\beta_3$ zwischen der dritten und vierten Faser (F4) 90 ° und der Winkel $\beta_4$ zwischen der vierten Faser (F4) und der ersten Faser (F1) ebenfalls 90 °. Als Winkel $\beta$ zwischen der ersten Faser (F1) (Referenz) und der zweiten (F2), dritten (F3) und vierten Faser (F4) ergeben sich dann im Uhrzeigersinn 90°, 180° und 270°. Analoge Betrachtungen gelten für die anderen möglichen Winkel.

Die erste Faser (F1) weist dann eine erste Richtung auf, die zweite Faser (F2), die in einem Winkel $\beta$ zur ersten Faser (F1) angeordnet ist, weist eine zweite Richtung auf. Bevorzugt liegen in der ersten Richtung und der zweiten Richtung eine ähnliche Anzahl von Fasern. Unter "ähnlich" wird vorliegend verstanden, dass der Unterschied zwischen der Anzahl der Fasern in jeder Richtung relativ zu der anderen Richtung < 30 %, besonders bevorzugt < 10 % und insbesondere bevorzugt < 2 % ist.

Die Fasern oder Faserbündel können in irregulären oder regulären Mustern eingebracht werden. Bevorzugt ist das Einbringen von Fasern oder Faserbündeln in regulären Mustern. Unter "regulären Mustern" wird im Rahmen der vorliegenden Erfindung verstanden, dass sämtliche Fasern parallel zueinander ausgerichtet sind und dass mindestens eine Faser oder ein Faserbündel zu allen direkt benachbarten Fasern oder Faserbündeln den gleichen Abstand (a) aufweist. Insbesondere bevorzugt weisen alle Fasern oder Faserbündel zu allen direkt benachbarten Fasern oder Faserbündeln den gleichen Abstand auf.

In einer weiteren bevorzugten Ausführungsform werden die Fasern oder Faserbündel so eingebracht, dass sie, bezogen auf ein rechtwinkliges Koordinatensystem, bei dem die Dickenrichtung (d) der z-Richtung entspricht, entlang der x-Richtung jeweils zueinander den gleichen Abstand ($a_x$) haben und entlang der y-Richtung den gleichen Abstand ($a_y$). Insbesondere bevorzugt weisen sie in x-Richtung und in y-Richtung den gleichen Abstand (a) auf, wobei $a=a_x=a_y$, ist.

Liegen zwei oder mehr Fasern (F) in einem Winkel $\beta$ zueinander vor, so weisen die ersten Fasern (F1), die parallel zueinander vorliegen, vorzugsweise ein reguläres Muster mit einem ersten Abstand ($a_1$) auf und die zweiten Fasern (F2), die parallel zueinander vorliegen und in einem Winkel $\beta$ zu den ersten Fasern (F1) liegen, vorzugsweise ein reguläres Muster mit einem zweiten Abstand ($a_2$). In einer bevorzugten Ausführungsform weisen die ersten Fasern (F1) und die zweiten Fasern (F2) jeweils ein reguläres Muster mit einem Abstand (a) auf. Dann gilt $a=a_1=a_2$.

Werden Fasern oder Faserbündel mit einem Winkel $\beta$ zueinander in den expandierten Partikelschaumstoff eingebracht, so ist es bevorzugt, dass die Fasern oder Faserbündel innerhalb jeder Richtung einem regulären Muster folgen.

Erfindungsgemäß weist die Oberfläche von mindestens einer Seite des Formkörpers mindestens eine Vertiefung auf.

In einer bevorzugten Ausführungsform des Formkörpers gemäß der vorliegenden Erfindung

i) ist die Vertiefung ein Schlitz oder ein Loch, mehr bevorzugt wird mindestens eine Vertiefung auf der Oberfläche von mindestens einer Seite des Formkörpers in Anschluss an die Durchführung von Schritt VI) gemäß dem erfindungsgemäßen Verfahren zur Herstellung eines Formkörpers aus expandiertem Partikelschaumstoff erzeugt und/oder

ii) ist die Gesamtoberfläche des erfindungsgemäßen Formkörpers zu mehr als 30 %, vorzugsweise zu mehr als 50 %, mehr bevorzugt zu mehr als 80 % und insbesondere mehr als 95 % geschlossen.

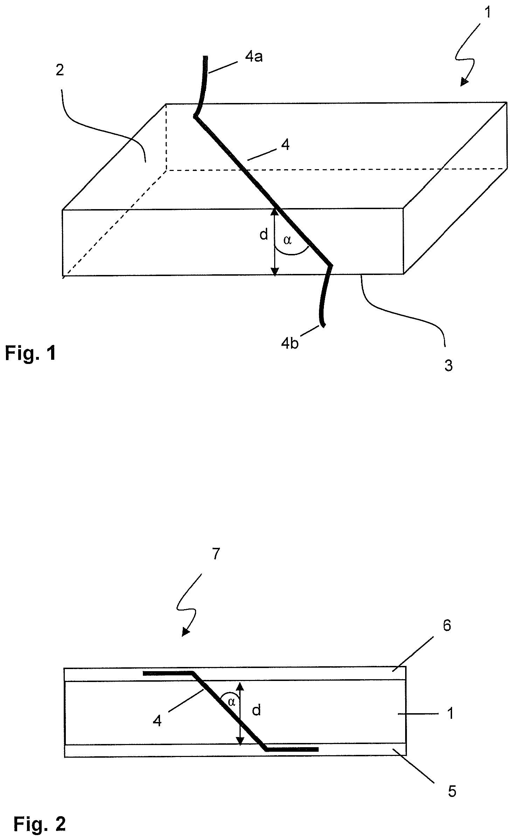

Figur 1 zeigt eine schematische Darstellung einer bevorzugten Ausführungsform des erfindungsgemäßen Formkörpers aus expandiertem Partikelschaumstoff (1) in einer perspektivischen Ansicht. (2) stellt dabei (die Oberfläche) einer ersten Seite des Formkörpers dar, während (3) eine zweite Seite des entsprechenden Formkörpers darstellt. Wie aus Figur 1 weiterhin ersichtlich, liegt die erste Seite (2) des Formkörpers gegenüber der zweiten Seite (3) dieses Formkörpers. Die Faser (F) ist durch (4) dargestellt. Ein Ende dieser Faser (4a) und somit der Faserbereich (FB1) ragt aus der ersten Seite (2) des Formkörpers heraus, während das andere Ende (4b) der Faser, das den Faserbereich (FB3) darstellt, aus der zweiten Seite (3) des Formkörpers herausragt. Der mittlere Faserbereich (FB2) befindet sich innerhalb des Formkörpers und ist somit von dem expandierten Partikelschaumstoff umschlossen.

In Figur 1 befindet sich die Faser (4), die beispielsweise eine einzelne Faser oder ein Faserbündel, vorzugsweise ein Faserbündel, ist, in einem Winkel $\alpha$ relativ zu Dickenrichtung (d) des Formkörpers bzw. zur Orthogonalen (der Oberfläche) der ersten Seite (2) des Formkörpers. Der Winkel $\alpha$ beträgt 10 bis 70°, vorzugsweise 30 bis 60°, besonders bevorzugt 30 bis 50°, ganz besonders 30 bis 45°, insbesondere 45°. In Figur 1 ist der Übersichtlichkeit halber nur eine einzelne Faser (F) dargestellt.

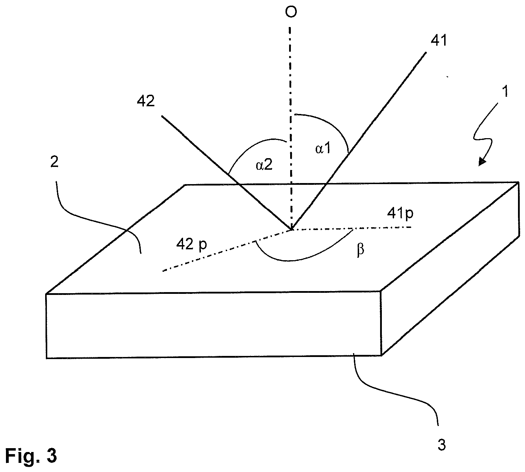

Figur 3 zeigt beispielhaft eine schematische Darstellung der verschiedenen Winkel. Der in Figur 3 dargestellte Formkörper aus expandiertem Partikelschaumstoff (1) enthält eine erste Faser (41) und eine zweite Faser (42). In Figur 3 ist zur besseren Übersichtlichkeit lediglich der Faserbereich (FB1), der aus der ersten Seite (2) des Formkörpers herausragt, für die beiden Fasern (41) und (42) eingezeichnet. Die erste Faser (41) bildet relativ zur Orthogonalen (O) der Oberfläche der ersten Seite (2) des Formkörpers einen ersten Winkel $\alpha$ ($\alpha1$). Die zweite Faser (42) bildet relativ zur Orthogonalen (O) der Oberfläche der ersten Seite (2) einen zweiten Winkel $\alpha$ ($\alpha2$). Die senkrechte Projektion der ersten Faser (41) auf die erste Seite (2) des Formkörpers (41p) bildet mit der senkrechten Projektion der zweiten Faser (42) auf die erste Seite (2) des Formkörpers (42p) den Winkel $\beta$.

Gegenstand der vorliegenden Erfindung ist außerdem ein Paneel, das mindestens einen erfindungsgemäßen Formkörper und mindestens eine Schicht (S1) umfasst. Ein "Paneel" kann gegebenenfalls in Fachkreisen auch als "Sandwich", "Sandwichmaterial", "Laminat" und/oder "Compositartikel" bezeichnet werden.

In einer bevorzugten Ausführungsform des Paneels weist das Paneel zwei Schichten (S1) auf, und die beiden Schichten (S1) sind jeweils an einer Seite des Formkörpers angebracht, die der jeweils anderen Seite im Formkörper gegenüberliegt.

In einer Ausführungsform des erfindungsgemäßen Paneels umfasst die Schicht (S1) mindestens ein Harz, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al. (Advances in Polymer Science, 184, S. 1 - 95, 2005), Pham et al. (Ullmann's Encyclopedia of Industrial Chemistry, Vol. 13, 2012), Fahnler (Polyamide, Kunststoff Handbuch 3/4, 1998) und Younes (WO12134878 A2).

Erfindungsgemäß bevorzugt ist außerdem ein Paneel, bei dem

i) der Faserbereich (FB1) der Faser (F) teilweise oder vollständig, vorzugsweise vollständig, mit der ersten Schicht (S1) in Kontakt ist, und/oder

ii) der Faserbereich (FB3) der Faser (F) teilweise oder vollständig, vorzugsweise vollständig, mit der zweiten Schicht (S1) in Kontakt ist, und/oder

iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, besonders bevorzugt aus Glasfasern oder Kohlenstofffasern in Form von Vliesen, Gelegen oder Geweben.

In einer weiteren erfindungsgemäßen Ausführungsform des Paneels enthält die mindestens eine Schicht (S1) zusätzlich mindestens ein faserförmiges Material, wobei

i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2.500 g/m² enthält und/oder

ii) das faserförmige Material Fasern aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern enthält.

Für die Naturfasern und die polymeren Fasern gelten die zuvor beschriebenen Ausführungen.

Eine Schicht (S1), die zusätzlich mindestens ein faserförmiges Material enthält, wird auch als faserverstärkte Schicht, insbesondere als faserverstärkte Harzschicht, sofern die Schicht (S1) ein Harz umfasst, bezeichnet.

Figur 2 zeigt eine weitere bevorzugte Ausführungsform der vorliegenden Erfindung. In einer zweidimensionalen Seitansicht ist ein erfindungsgemäßes Paneel (7) dargestellt, das einen erfindungsgemäßen Formkörper (1) umfasst, wie beispielsweise vorstehend im Rahmen der Ausführungsform zu Figur 1 dargestellt. Soweit nicht anders ausgeführt, haben die Bezugszeichen bei sonstigen Abkürzungen in den Figuren 1 und 2 die gleiche Bedeutung.

Bei der Ausführungsform gemäß Figur 2 umfasst das erfindungsgemäße Paneel zwei Schichten (S1), die durch (5) und (6) dargestellt sind. Die beiden Schichten (5) und (6) befinden sich somit an jeweils zueinander gegenüberliegenden Seiten des Formkörpers (1). Bei den beiden Schichten (5) und (6) handelt es sich vorzugsweise um Harzschichten oder faserverstärkte Harzschichten. Wie aus Figur 2 weiterhin ersichtlich, sind die beiden Enden der Faser (4) von der jeweiligen Schicht (5) bzw. (6) umschlossen.

Gegebenenfalls können zwischen dem Formkörper (1) und der ersten Schicht (5) und/oder zwischen dem Formkörper (1) und der zweiten Schicht (6) eine oder mehrere weitere Schichten enthalten sein. Wie vorstehend für Figur 1 beschrieben, ist auch in Figur 2 der Einfachheit halber eine einzige Faser (F) durch (4) dargestellt. Hinsichtlich der Anzahl an Fasern bzw. Faserbündeln in der Praxis gelten die sinngemäßen Aussagen wie vorstehend für Figur 1 aufgeführt.

Gegenstand der vorliegenden Erfindung ist weiterhin ein Verfahren zur Herstellung des erfindungsgemäßen Formkörpers, wobei mindestens eine Faser (F) in den expandierten Partikelschaumstoff teilweise eingebracht wird, wodurch sich die Faser (F) mit dem Faserbereich (FB2) innerhalb des Formkörpers befindet und von dem expandierten Partikelschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt und wodurch die Faser (F) in einem Winkel $\alpha$ von 10 bis 70° relativ zur Dickenrichtung (d) des Formkörpers in den expandierten Partikelschaumstoff eingebracht ist, wobei der Faserbereich (FB1) und der Faserbereich (FB3) jeweils unabhängig voneinander 1 bis 45 % und der Faserbereich (FB2) 10 bis 98 % der Gesamtlänge der Faser (F) ausmachen, wobei zwei oder mehr Fasern (F) in einem Winkel $\beta$ zueinander in dem Formkörper vorliegen, wobei der Winkel $\beta$ im Bereich $\beta = 360°/n$ liegt, wobei n eine ganzzahlige Zahl ist und im Bereich von 2 bis 6 liegt.

Zum Einbringen der Faser (F) und/oder eines Faserbündels eignen sich prinzipiell alle dem Fachmann bekannten Methoden. Geeignete Verfahren sind beispielsweise in WO 2006/125561 oder in WO 2011/012587 beschrieben.

In einer Ausführungsform des erfindungsgemäßen Verfahrens erfolgt das teilweise Einbringen der mindestens einen Faser (F) in den expandierten Partikelschaumstoff durch Einnähen unter Verwendung einer Nadel. Vorzugsweise erfolgt das teilweise Einbringen durch die Schritte a) bis f):

a) gegebenenfalls Aufbringen von mindestens einer Schicht (S2) auf mindestens eine Seite des expandierten Partikelschaumstoffs,

b) Erzeugung von einem Loch je Faser (F) im expandierten Partikelschaumstoff und gegebenenfalls in der Schicht (S2), wobei sich das Loch von einer ersten Seite zu einer zweiten Seite des expandierten Partikelschaumstoffs und gegebenenfalls durch die Schicht (S2) erstreckt,

c) Bereitstellung von mindestens einer Faser (F) auf der zweiten Seite des expandierten Partikelschaumsstoffs,

d) Durchführen einer Nadel von der ersten Seite des expandierten Partikelschaumstoffs durch das Loch zu der zweiten Seite des expandierten Partikelschaumstoffs und gegebenenfalls Durchführung der Nadel durch die Schicht (S2),

e) Befestigen von mindestens einer Faser (F) an der Nadel auf der zweiten Seite des expandierten Partikelschaumstoffs, und

f) Rückführen der Nadel samt Faser (F) durch das Loch, so dass die Faser (F) sich mit dem Faserbereich (FB2) innerhalb des Formkörpers befindet und von dem expandierten Partikelschaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt,

besonders bevorzugt werden die Schritte b) und d) gleichzeitig durchgeführt.

In einer besonders bevorzugten Ausführungsform werden die Schritte b) und d) gleichzeitig durchgeführt. In dieser Ausführungsform wird das Loch von der ersten Seite zu der zweiten Seite des expandierten Partikelschaumstoffs durch das Durchführen einer Nadel von der ersten Seite des expandierten Partikelschaumstoffs zu der zweiten Seite des expandierten Partikelschaumstoffs erzeugt.

In dieser Ausführungsform kann das Einbringen der mindestens einen Faser (F) beispielsweise die folgenden Schritte umfassen:

a) gegebenenfalls Aufbringen einer Schicht (S2) auf mindestens eine Seite des expandierten Partikelschaumstoffs,

b) Bereitstellen von mindestens einer Faser (F) auf der zweiten Seite des expandierten Partikelschaumstoffs,

c) Erzeugung von einem Loch je Faser (F) im expandierten Partikelschaumstoff und gegebenenfalls in der Schicht (S2), wobei sich das Loch von der ersten Seite zu einer zweiten Seite des expandierten Partikelschaumstoffs und gegebenenfalls durch die Schicht (S2) erstreckt und wobei die Erzeugung des Lochs durch das Durchführen einer Nadel durch den expandierten Partikelschaumstoff und gegebenenfalls durch die Schicht (S2) erfolgt,

d) Befestigen von mindestens einer Faser (F) an der Nadel auf der zweiten Seite des expandierten Partikelschaumstoffs,

e) Rückführen der Nadel samt Faser (F) durch das Loch, so dass die Faser (F) sich mit dem Faserbereich (FB2) innerhalb des Formkörpers befindet und von dem expandierten Partikelschaumstoff umschlossen ist, während der Faserbereich (FB1) der Faser (F) aus einer ersten Seite des Formkörpers oder gegebenenfalls aus der Schicht (S2) herausragt und der Faserbereich (FB3) aus einer zweiten Seite des Formkörpers herausragt,

f) gegebenenfalls Abschneiden der Faser (F) an der zweiten Seite und

g) gegebenenfalls Aufschneiden der an der Nadel gebildeten Schlaufe der Faser (F).

In einer bevorzugten Ausführungsform wird als Nadel eine Hakennadel eingesetzt und mindestens eine Faser (F) in Schritt d) in die Hakennadel eingehängt.

In einer weiteren bevorzugten Ausführungsform werden mehrere Fasern (F) gleichzeitig in den expandierten Partikelschaumstoff gemäß der vorher beschriebenen Schritte eingebracht.

Weiterhin Gegenstand der vorliegenden Erfindung ist ein Verfahren zur Herstellung des erfindungsgemäßen Paneels, bei dem die mindestens eine Schicht (S1) als reaktives viskoses Harz auf einen erfindungsgemäßen Formkörper aufgebracht und ausgehärtet wird, vorzugsweise durch Flüssigimprägnierverfahren, besonders bevorzugt durch druck- bzw. vakuumunterstützte Imprägnierverfahren, insbesondere bevorzugt durch Vakuuminfusion oder druckunterstützte Injektionsverfahren, am meisten bevorzugt durch Vakuuminfusion. Flüssigimprägnierverfahren sind dem Fachmann als solche bekannt und werden beispielsweise in Wiley Encyclopedia of Composites (2nd Edition, Wiley, 2012), Parnas et al. (Liquid Composite Moulding, Hanser, 2000) und Williams et al. (Composites Part A, 27, S. 517 - 524, 1997) ausführlich beschrieben.

Zur Herstellung des erfindungsgemäßen Paneels können verschiedene Hilfsmaterialien eingesetzt werden. Geeignete Hilfsmaterialien für die Herstellung durch Vakuuminfusion sind beispielsweise Vakuumfolie, bevorzugt aus Nylon, Vakuumdichtband, Fließhilfe, bevorzugt aus Nylon, Trennfolie, bevorzugt aus Polyolefin, Abreißgewebe, bevorzugt aus Polyester sowie eine semipermeable Folie, vorzugsweise eine Membranfolie, besonders bevorzugt eine PTFE Membranfolie und Absaugvlies, bevorzugt aus Polyester. Die Wahl geeigneter Hilfsmaterialien richtet sich nach dem zu fertigenden Bauteil, dem gewählten Prozess und den eingesetzten Materialien, speziell dem Harzsystem. Beim Einsatz von Harzsystemen auf der Basis von Epoxid und Polyurethan werden bevorzugt Fließhilfen aus Nylon, Trennfolien aus Polyolefin, Abreißgewebe aus Polyester sowie eine semipermeable Folien als PTFE-Membranfolien und Absaugvliese aus Polyester eingesetzt.

Diese Hilfsmaterialien können auf verschiedene Arten bei den Verfahren zur Herstellung des erfindungsgemäßen Paneels eingesetzt werden. Paneele werden besonders bevorzugt aus den Formkörpern durch Aufbringung faserverstärkter Decklagen mittels Vakuuminfusion hergestellt. In einem typischen Aufbau werden zur Herstellung des erfindungsgemäßen Paneels an der Ober- und Unterseite der Formkörper faserförmige Materialien und ggf. weitere Schichten aufgebracht. Anschließend werden Abreißgewebe und Trennfolien platziert. Bei der Infusion des flüssigen Harzsystems kann mit Fließhilfen und / oder Membranfolien gearbeitet werden. Besonders bevorzugt sind die folgenden Varianten:

i) Einsatz einer Fließhilfe auf nur einer Seite des Aufbaus und/oder

ii) Einsatz einer Fließhilfe auf beiden Seiten des Aufbaus und/oder

iii) Aufbau mit einer semipermeablen Membran (VAP-Aufbau), diese wird vorzugsweise flächig über den Formkörper drapiert, auf dem Fließhilfen, Trennfolie und Abreißgewebe auf einer oder beiden Seiten eingesetzt werden und die semipermeable Membran durch Vakuumdichtband zur Formoberfläche hin abgedichtet wird, das Absaugvlies wird auf der Formkörper fremden Seite der semipermeablen Membran eingesetzt wodurch die Luft flächig nach oben evakuiert wird und/oder

iv) Verwendung einer Vakuumtasche aus Membranfolie, die bevorzugt auf die gegenüberliegende Anguss-Seite des Formkörpers platziert wird, womit die Luft von der gegenüberliegenden Seite zum Anguss evakuiert wird.

Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Nach der Infusion des Harzsystems findet unter Aufrechterhaltung des Vakuums die Reaktion des Harzsystems statt.

Gegenstand der vorliegenden Erfindung ist außerdem die Verwendung des erfindungsgemäßen Formkörpers oder des erfindungsgemäßen Paneels für Rotorblätter, in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

Nachfolgend wird die vorliegende Erfindung anhand von Beispielen verdeutlicht.

Beispiel 1 (Vergleichsbeispiel; Formkörper aus expandiertem Partikelschaumstoff ohne Faserverstärkung)

Für sämtliche Versuche gemäß Beispiel 1 werden Partikelschäume auf der Basis von Blends aus PPE und PS eingesetzt (Mischung aus PPE/PS-Batch Noryl C6850, Sabic und PS 158K, BASF). Die expandierbaren Polymerpartikel wurden durch ein Schmelzeimprägnierverfahren mit anschließender drucküberlagerter Unterwassergranulierung gefertigt.

a) Herstellung der expandierbaren Polymerpartikel

In einem Doppelschneckenextruder mit einem Schneckendurchmesser von 43 mm und einem Verhältnis von Länge zu Durchmesser von 44 werden 59,5 Gewichtsanteile eines PPE/PS-Blends (Zusammensetzung 50 % PPE, 50 % PS) der Firma Sabic (Noryl C6850), 40 Gewichtsanteile eines PS der Firma BASF SE (PS 158 K Q4) und 0,5 Gewichtsanteile Talkum der Firma Mondo Minerals (Microtalc IT Extra) dosiert. Die vorgenannten thermoplastischen Polymere werden in der Aufschmelzzone des Doppelschneckenextruders aufgeschmolzen und mit dem Talkum gemischt. Nach dem Aufschmelzen der thermoplastischen Polymere und dem Einmischen des Talkums werden 4 Gewichtsanteile bezogen auf die Menge an Feststoff (Polymer und Talkum) einer Mischung aus n-Pentan und iso-Pentan (80 Gew.-% n-Pentan und 20 Gew.-% iso-Pentan bezogen auf die Gesamtmenge Pentan) sowie 0,3 Gewichtsanteile bezogen auf die Menge an Feststoff (Polymer und Talkum) an Stickstoff als Treibmittel zugegeben. Beim Durchlaufen der restlichen Extruderstrecke werden das Treibmittel und die Polymerschmelze miteinander vermischt, so dass sich eine homogene Mischung bildet. Der Gesamtdurchsatz des Extruders, welcher die Polymere, das Talkum und das Treibmittel beinhaltet, beträgt 70 kg/h.

In den Beispielen werden folgende Prozessparameter eingestellt: Die Drehzahl des Extruders wird bei 140 U/min fixiert. Die Temperatur im Extruder in der Aufschmelzzone und während der Einmischung des Talkums in die Polymere beträgt zwischen 230 °C und 240 °C. Die Temperatur am Extrudergehäuse der Injektionsstelle wird auf 230 °C bis 220 °C und alle nachfolgenden Gehäuse bis zum Ende des Extruders auf 220 °C bis 210 °C herabgesetzt. Die Schmelzepumpe und das Anfahrventil werden auf 210 °C, ein nachfolgendes Gehäuse auf 215 °C gehalten. Über die Schmelzepumpe wird ein Druck am Ende des Extruders von 85 bar eingestellt. Die Temperatur der ölbeheizten Lochplatte auf eine Solltemperatur von 290 °C geheizt.

Für alle Beispiele wird das Gemisch aus Polymer, Talkum und Treibmittel durch die Lochplatte mit 50 Löchern mit einem Durchmesser von 0,85 mm gedrückt und in der dahinterliegenden von Wasser durchströmten Granulierkammer durch 10 rotierende an einem Messerkranz befestigte Messer abgeschlagen. Dabei werden Partikel mit einer durchschnittlichen Größe von ca. 1,25 mm und einem Gewicht von ca. 1,1 mg hergestellt. Der Druck in der Granulierkammer beträgt 12 bar. Das temperierte Medium wird auf 50 °C konstant gehalten. Die Trennung des Prozessmediums und der hergestellten Granulate/Partikel erfolgt anschließend in einem Rotationstrockner.

b) Herstellung der Formkörper aus expandiertem Partikelschaumstoff

Anschließend werden die expandierbaren Polymerpartikel zu Formkörpern aus expandiertem Partikelschaumstoff weiterverarbeitet. Bei einem Druck von 1,2 bar über 200 Sekunden werden die Partikel bei einer Rührgeschwindigkeit von 60 rpm vorgeschäumt. Dabei ergibt sich ein Schüttgewicht von 49 kg/m$^3$. Anschließend werden die Partikel für 24 Stunden bei Raumtemperatur stabilisiert. Die Schaumblöcke werden mit einer Schaumformmaschine als rechteckige Platten für die Versuche V1, V2 und V4 hergestellt. Zudem werden rechteckige Platten mit Schlitzen hergestellt (V3), die sich aus der Werkzeugform ergeben (Schlitzabstand: 30 mm, Orientierung: längs und quer auf einer Seite der Platte, Schlitzbreite: 2 mm, Schlitztiefe 19 mm). Die Herstellung erfolgt durch Querbedampfung bei 1,5 bar über 10 Sekunden und Autoklav-Bedampfung bei 2,2 bar über 15 Sekunden. Danach wird der Schaumblock abgekühlt und aus der Form gelöst. Die Dichte der Blöcke beträgt nach 24 Stunden bei Raumtemperatur 50 g/l.

c) Harzaufnahme der Formkörper unter Ausbildung eines Paneels

Für die Harzaufnahme werden Platten direkt nach der Herstellung mit geschlossener Oberfläche (V1) und nach spanender Entfernung der Oberfläche durch Hobeln (V2) verglichen. Geschlitzte Platten werden entweder spanend durch entsprechende Formteilwerkzeuge beim Partikelschaumprozess (V3) oder durch spanende Bearbeitung mittels Kreissägen aus Platten (V4) hergestellt. In beiden Fällen beträgt der Schlitzabstand längs und quer jeweils 30 mm. Die Schlitze werden nur auf einer Seite der Platte mit einer Schlitzbreite von 2 mm und einer Schlitztiefe von 19 mm eingebracht (Plattendicke von 20 mm).

Zur Bestimmung der Harzaufnahme werden neben den eingesetzten Harzsystemen, den Schaumstoffplatten und Glasgelegen die folgende Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele, nachfolgend auch als Sandwichmaterialien bezeichnet, werden aus den Formkörpern durch Aufbringung faserverstärkter Decklagen mittels Vakuuminfusion hergestellt. An der Ober- und Unterseite der (faserverstärkten) Schaumstoffe werden je zwei Lagen Quadrax-Glasgelege (Roving: E-Glass SE1500, OCV; Textil: Saertex, isotropes Laminat [0°/-45°/90°45°] mit je 1200 g/m$^2$) aufgebracht. Für die Bestimmung der Harzaufnahme wird zwischen dem Formkörper, nachfolgend auch als Kernmaterial bezeichnet, und dem Glasgelege, im Gegensatz zur standardmäßigen Herstellung der Paneele, eine Trennfolie eingelegt. Damit ist die Harzaufnahme des reinen Formkörpers bestimmbar. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 $^{+/-}$ 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Formkörpern und glasfaserverstärkten Decklagen bestehen.

Zu Beginn werden die Formkörper nach ISO 845 (Stand Oktober 2009) vermessen, um die Rohdichte des Schaumes zu erhalten. Nach dem Aushärten des Harzsystems werden die verarbeiteten Paneele besäumt, um überschüssige Harzansammlungen in den Randbereichen durch nicht passend anliegende Vakuumfolie zu eliminieren. Anschließend werden die Decklagen entfernt und die enthaltenen Formkörper erneut durch ISO 845 vermessen. Aus der Differenz der Dichten ergibt sich die absolute Harzaufnahme. Durch Multiplikation mit der Dicke des Formkörpers ergibt sich die entsprechende Harzaufnahme in kg/m$^2$.

Die gezeigten Ergebnisse (siehe Tabelle 1) demonstrieren, dass die Harzaufnahme bei Formkörpern aus Partikelschäumen deutlich reduziert werden kann. Folglich ergibt sich daraus eine reduzierte Dichte des Paneels.

Tabelle 1

| Beispiel | Material | Geschlossene Oberfläche | Harzaufnahme |
|----------|----------|-------------------------|--------------|
| V1 | Platte direkt nach Verarbeitung (geschlossene Oberfläche) | > 90% | < 0.2 kg/m$^2$ |
| V2 | Platte nach spanender Entfernung der Oberfläche | < 5% | 0,4 kg/m$^2$ |

(fortgesetzt)

| Beispiel | Material | Geschlossene Oberfläche | Harzaufnahme |
|---|---|---|---|
| V3 | Geschlitzte Platte direkt nach Verarbeitung | > 90% | 3,3 kg/m$^2$ |
| V4 | Geschlitzte Platte durch spanende Verarbeitung | < 5% | 3,8 kg/m$^2$ |

Beispiel 2 (Formkörper aus expandiertem Partikelschaumstoff mit Faserverstärkung - Referenzbeispiel ohne Vertiefung)

Um die Schälfestigkeit bei gleichzeitig geringer Harzaufnahme an der Oberfläche zu verbessern, werden die Versuche aus Beispiel 1 wiederholt, allerdings wird der Formkörper (expandierter Partikelschaumstoff) zunächst teilweise mit Glasfasern (Rovings, S2-Glass, 400 tex, AGY) verstärkt.

Die Glasfasern werden in Form von Rovings unter einem Winkel $\alpha$ von 45° in vier unterschiedlichen Raumrichtungen im Winkel $\beta$ zueinander eingebracht (0°, 90°, 180°, 270°). In allen Raumrichtungen wird eine identische Anzahl von Glasfasern eingebracht. Die Glasfasern sind in einem regulären rechteckigen Muster mit gleichen Abständen (a) eingebracht. In den Versuchen wird der Abstand von a = 10 mm bis zu a = 20 mm variiert. An beiden Seiten werden zusätzlich ca. 10 mm der Glasfasern an der Decklage an Überstand gelassen, um die Anbindung an die später eingebrachten Glasfasermatten als Decklagen zu verbessern. Die Faser bzw. Faserrovings werden durch einen kombinierten Näh- / Häkelprozess automatisiert eingebracht. Zunächst wird mit einer Hakennadel (Durchmesser ca. 0,80 mm) vollständig von der ersten Seite zur zweiten Seite des Partikelschaums durchgestochen. Auf der zweiten Seite wird ein Roving in den Haken der Hakennadel eingehängt und anschließend von der zweiten Seite durch die Nadel zurück zur ersten Seite des Partikelschaumstoffs gezogen. Schließlich wird der Roving an der zweiten Seite abgeschnitten und an der Nadel die gebildetete Rovingschlaufe aufgeschnitten. Die Hakennadel ist somit bereit für den nächsten Vorgang. Insgesamt wurden 40 000 verstärkende Glasfaserelemente (Rovings) / m$^2$ bei einem Abstand von 10 mm und 10 000 Glasfaserelemente / m$^2$ bei einem Raster von $a_x=a_y=20$ mm eingebracht.

Anschließend werden Paneele aus den Formkörpern durch Aufbringung faserverstärkter Decklagen mittels Vakuuminfusion hergestellt wie vorstehend für Beispiel 1 beschrieben. Im Gegensatz zu Beispiel 1 wird zwischen dem Formkörper und den Glasgelegen keine Trennfolie eingebracht.

Die Schälfestigkeit der Paneele wird mit single cantilever beam (SCB)-Proben bestimmt. Die Formteilhöhe der Proben beträgt 20 mm, die Deckschichten bestehen aus jeweils ca. 2 mm dicken, quasiisotropen glasfaserverstärkten Epoxidharzschichten. Die Proben werden in einer Zwick Z050 Zugprüfmaschine mit einer Geschwindigkeit von 5 mm/min geprüft, wobei jeder Probekörper mehrfach (3 bis 4 mal) be- und entlastet wird. Das Risswachstum bzw. der Zuwachs bei jedem Belastungszyklus ($\Delta a$) wird optisch ermittelt. Aus dem Kraft-Weg-Verlauf wird die Risswachstumsenergie ($\Delta U$) ermittelt. Daraus wird die Risszähigkeit bzw. Schälfestigkeit ermittelt als

$$G_{IC} = \frac{\Delta U}{B\,\Delta a}$$

mit B als Probenbreite.

Tabelle 2

| Beispiel | Material, Winkel $\alpha$, Abstände $a_x$ x $a_y$ | Schälfestigkeit | Harzaufnahme durch Oberfläche |
|---|---|---|---|
| V1 | ungehobelter Schaum | 0,7 kJ/m$^2$ | < 0,2 kg/m$^2$ |
| V2 | gehobelter Schaum | 0,8 kJ/m$^2$ | 0,4 kg/m$^2$ |
| B5 | V1, faserverstärkt mit | 1,3 kJ/m$^2$ | < 0,2 kg/m$^2$ |
|  | 45 ° / 20 mm x 20 mm |  |  |
| B6 | V1, faserverstärkt mit 45 ° / 12 mm x 12 mm | 3,5 kJ/m$^2$ | < 0,2 kg/m$^2$ |
| B7 | V1, faserverstärkt mit 45 ° / 10 mm x 10 mm | 6,9 kJ/m$^2$ | < 0,2 kg/m$^2$ |
| B8 | V2, faserverstärkt mit 45 ° / 20 mm x 20 mm | 1,4 kJ/m$^2$ | 0,4 kg/m$^2$ |

Wie deutlich aus Tabelle 2 zu erkennen ist, kann durch die erfindungsgemäßen einen expandierten Partikelschaumstoff enthaltenden Formteile mit integrierten Fasern die Schälfestigkeit in einem Paneel deutlich gesteigert werden (B5 bis B8 ). Die Verbesserung der Schälfestigkeit durch Hobeln der Oberfläche ermöglicht dagegen nur moderate Erhöhungen der Schälfestigkeit und ist gleichzeitig mit erhöhter Harzaufnahme verbunden (V2). Die Faserverstärkung des Partikelschaumstoffs erlaubt damit bei nahezu identischer Harzaufnahme der Oberfläche eine deutliche Erhöhung der Schälfestigkeit. Speziell hängt die Festigkeit nur noch geringfügig von der Oberflächenrauigkeit bzw. -vorbehandlung ab und ermöglich damit eine Entkopplung der beiden Optimierungsziele Schälfestigkeit und Harzaufnahme.

Beispiel 3 (Auslegung eines Paneels zur Verdeutlichung der bevorzugten Faserwinkel, theoretische Bestimmung - Referenzbeispiel ohne Vertiefung)

Die mechanischen Eigenschaften eines Formkörpers, der einen expandierten Partikelschaumstoff gemäß Beispiel V1 enthält, wurden theoretisch bestimmt. Als Faser (F) wurden Glasfasern (Rovings, S2-Glass, 406 tex, AGY) eingesetzt. Der Winkel $\alpha$, in dem die Fasern (F) als eingebracht angenommen wurden, lag im Bereich von 0 bis 80° Bei Winkeln $\alpha$ >0° wurden die Fasern in vier unterschiedlichen Raumrichtungen im Winkel $\beta$ (0°, 90°, 180°, 270°) zueinander angenommen. Es wurden reguläre Muster mit gleichen Abständen a = 12 mm und bei einem Winkel $\alpha$ von 0° 27778 Glasfaserelemente/m² angenommen.
Die Schubmoduln wurden für unterschiedliche Winkel $\alpha$ rechnerisch ermittelt. Hierzu wurde ein Fachwerkmodell mit nachgiebigen Stäben zur Verbindung der oberen und unteren Deckschichten verwendet. Die Deckschichten wurden als unendlich steif angenommen. Der expandierte Partikelschaumstoff wies dabei eine Dicke von 25 mm, eine Schubsteifigkeit G=19 MPa, und eine Drucksteifigkeit E=35 MPa auf. Die Harzaufnahme an der Oberfläche des Schaumstoffs wurde mit 0,2 kg/m² angenommen (konservative Abschätzung, da in experimentellen Versuchen < 0,2 kg/m²).
Die Faserbündel bestehen aus S-Glasfaser. Durch den Herstellprozess waren die verstärkenden Faserelemente 2 x 406 tex (= 812 tex) stark, der Faservolumenehalt wurde mit 40 Vol.-% und der Durchmesser mit 1,0 mm angenommen. Damit ergeben sich die in Tabelle 3 angegebenen Schubmoduln, Dichten des Formkörpers im verarbeiteten Paneel und spezifischen Schubmoduln.

Tabelle 3

| Beispiel | Winkel $\alpha$ (°) | Schubmodul (MPa) | Dichte des Formkörpers (kg/m³) | Spezifische Schubmoduln (MPa/ (kg/m³) |
|---|---|---|---|---|
| V9 | 0 | 14 | 127 | 0,11 |
| B10 | 10 | 25 | 128 | 0,20 |
| B11 | 20 | 53 | 131 | 0,41 |
| B12 | 30 | 91 | 135 | 0,67 |
| B13 | 40 | 127 | 144 | 0,88 |
| B14 | 45 | 140 | 150 | 0,94 |
| B15 | 50 | 148 | 157 | 0,94 |
| B16 | 60 | 147 | 182 | 0,81 |
| B17 | 70 | 121 | 232 | 0,52 |
| V18 | 80 | 74 | 388 | 0,19 |

Es ist deutlich zu erkennen, dass mit steigendem Faserwinkel die Schubsteifigkeit rasch zunimmt, ehe sie ab ca. 60° wieder abfällt.
Für die Anwendung der Paneele ist generell die Biegesteifigkeit bzw. Beulfestigkeit sehr wichtig. Die Beulsteifigkeit eines Paneels mit parallelen, symmetrischen Deckschichten kann bei endseitig eingebrachter Normalkraft wie folgt bestimmt werden:

$$F \geq \frac{\pi^2 D}{\left(l^2 + \frac{\pi^2 D t}{G d^2}\right)} b$$

wobei F die Kraft bis zum Auftreten von globalem Beulen (=Beulfestigkeit) ist, D ist die Biegesteifigkeit des Paneels, G der Schubmodul des Formkörpers (= Kernmaterial), t die Dicke des Formkörpers des Paneels, b die Breite des Paneels und d ist die Dicke des Formkörpers (= Kernmaterial) zzgl. einer Deckschichtdicke.

Die Biegesteifigkeit des Paneels ergibt sich aus:

$$D = \frac{E_D \, t_D^3}{6} + \frac{E_D \, t_D d^2}{2} + \frac{E_K \, t_K^3}{12}$$

$E_D$ ist der E-Modul der Deckschicht, $E_K$ der E-Modul des Formkörpers (= Kernmaterial), $t_D$ die Dicke der Deckschicht pro Seite, $t_k$ die Dicke des Formkörpers (= Kernmaterial), d die Dicke des Kernmaterials zzgl. der Dicke einer Deckschicht.

Als Breite des Paneels wurden 0,1 m angenommen, die Läge betrug 0,4 m. Die Dicke des Formkörpers 25 mm, die Dicke der Deckschicht 2 mm, der E-Modul der Deckschicht 39 GPa.

Als Formkörper wurden die Formkörper gemäß Beispiel V9 bis V18 eingesetzt.

Die Ergebnisse sind in Tabelle 4 angegeben.

Tabelle 4

| Beispiel | Winkel $\alpha$ (°) | Dichte des Formkörpers (kg/m$^3$) | Beulstabilität (kN) | Spezifische Beulstabilität (kN/(kg/m$^3$)) |
|---|---|---|---|---|
| V19 | 0 | 127 | 30 | 0,24 |
| B20 | 10 | 128 | 47 | 0,36 |
| B21 | 20 | 131 | 77 | 0,59 |
| B22 | 30 | 135 | 101 | 0,74 |
| B23 | 40 | 144 | 114 | 0,80 |
| B24 | 45 | 150 | 118 | 0,79 |
| B25 | 50 | 157 | 120 | 0,76 |
| B26 | 60 | 182 | 120 | 0,66 |
| B27 | 70 | 232 | 112 | 0,48 |
| V28 | 80 | 388 | 90 | 0,23 |

Es ist deutlich zu erkennen, dass mit steigendem Winkel $\alpha$ die Beulstabilität rasch zunimmt, ehe sie ab ca. 60° wieder abfällt.

**Patentansprüche**

1. Formkörper aus expandiertem Partikelschaumstoff, **dadurch gekennzeichnet, dass** die Oberfläche von mindestens einer Seite des Formkörpers mindestens eine Vertiefung aufweist und dass mindestens eine Faser (F) sich mit einem Faserbereich (FB2) innerhalb des Formkörpers befindet und von dem expandierten Partikelschaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei die Faser (F) in einem Winkel $\alpha$ von 10 bis 70° relativ zur Dickenrichtung (d) des Formkörpers in den expandierten Partikelschaumstoff eingebracht ist, wobei der Faserbereich (FB1) und der Faserbereich (FB3) jeweils unabhängig voneinander 1 bis 45 % und der Faserbereich (FB2) 10 bis 98 % der Gesamtlänge der Faser (F) ausmachen, wobei zwei oder mehr Fasern (F) in einem Winkel $\beta$ zueinander in dem Formkörper vorliegen, wobei der Winkel $\beta$ im Bereich $\beta = 360°/n$ liegt, wobei n eine ganzzahlige Zahl ist und im Bereich von 2 bis 6 liegt.

2. Formkörper gemäß Anspruch 1, **dadurch gekennzeichnet, dass** der expandierte Partikelschaumstoff auf Basis von mindestens einem Polymer ist, das ausgewählt ist aus Polystyrol, Polyphenylenoxid, einem aus Phenylenoxid hergestellten Copolymer, einem aus Styrol hergestellten Copolymer, Polysulfon, Polyethersulfon, Polypropylen, Polyethylen, Polyamid, Polycarbonat, Polyacrylat, Polymilchsäure, Polyimid, Polyvinylidendifluorid oder ein Gemisch davon.

3. Formkörper gemäß Anspruch 1 oder 2, **dadurch gekennzeichnet, dass**

i) die Faser (F) eine einzelne Faser oder ein Faserbündel ist und/oder

ii) die Faser (F) eine organische, anorganische, metallische, keramische Faser ist, und/oder

iii) die Faser (F) als Faserbündel eingesetzt wird mit einer Anzahl von Einzelfasern pro Bündel von mindestens 10 und/oder

iv) der Faserbereich (FB1) und der Faserbereich (FB3) jeweils unabhängig voneinander 2 bis 40 % und der Faserbereich (FB2) 20 bis 96 % der Gesamtlänge einer Faser (F) ausmachen.

**4.** Formkörper gemäß einem der Ansprüche 1 bis 3, **dadurch gekennzeichnet, dass**

i) die Faser (F) in einem Winkel $\alpha$ von 30 bis 60° relativ zur Dickenrichtung (d) des Formkörpers in den expandierten Partikelschaumstoff eingebracht ist, und/oder

ii) im Formkörper die erste Seite des Formkörpers, aus der der Faserbereich (FB1) der Faser (F) herausragt, der zweiten Seite des Formkörpers gegenüberliegt, aus der der Faserbereich (FB3) der Faser (F) herausragt, und/oder

iii) der Formkörper eine Vielzahl von Fasern (F) enthält und/oder mehr als 10 Fasern (F) oder Faserbündel pro m$^2$ umfasst.

**5.** Formkörper gemäß einem der Ansprüche 1 bis 4, **dadurch gekennzeichnet, dass** der expandierte Partikelschaumstoff des Formkörpers hergestellt wird durch ein Verfahren umfassend die folgenden Schritte I) bis V):

I) Herstellung von expandierbaren Polymerpartikeln aus dem entsprechenden Polymer in Gegenwart eines Treibmittels bei erhöhter Temperatur.

II) gegebenenfalls Abkühlen und/oder Entspannen der treibmittelbeladenen expandierbaren Polymerpartikel, gegebenenfalls mit Expansion der Polymerpartikel zu teilexpandierten Polymerpartikeln,

III) gegebenenfalls Vorschäumen der expandierbaren Polymerpartikel und/oder gegebenenfalls der teilexpandierten Polymerpartikel bei erhöhter Temperatur im Bereich von 95 bis 150 °C und/oder bei geringen Drücken im Bereich von 1 bis 5 bar in Gegenwart von Wasserdampf oder eines Wasserdampf/Luft-Gemischs unter Erhalt von expandierten Partikeln,

IV) Einbringen der teilexpandierten Polymerpartikel aus Schritt II) und/oder der expandierten Partikel aus Schritt III) in ein formgebendes Werkzeug,

V) Beaufschlagung der teilexpandierten Polymerpartikel aus Schritt II) und/oder der expandierter Partikel aus Schritt III) mit Wasserdampf bei erhöhtem Druck im Bereich von 1 bis 25 bar und/oder erhöhter Temperatur im Bereich von 100 bis 220 °C im formgebenden Werkzeug unter Erhalt der Formkörper aus expandiertem Partikelschaumstoff.

**6.** Formkörper gemäß Anspruch 5, **dadurch gekennzeichnet, dass** die Partikel zur Herstellung des expandierten Partikelschaumstoffs des Formkörpers durch ein Suspensionsverfahren, ein Schmelzimprägnierverfahren, ein Schmelzexpandierverfahren oder ein Kesselexpandierverfahren hergestellt werden.

**7.** Formkörper gemäß einem der Ansprüche 1 bis 6, **dadurch gekennzeichnet, dass** die Gesamtoberfläche des Formkörpers zu mehr als 30 % geschlossen ist.

**8.** Formkörper gemäß einem der Ansprüche 1 bis 7, **dadurch gekennzeichnet, dass** das teilweise Einbringen der mindestens einen Faser (F) durch die Schritte a) bis f) erfolgt

a) gegebenenfalls Aufbringen von mindestens einer Schicht (S2) auf mindestens eine Seite des expandierten Partikelschaumstoffs,

b) Erzeugung von einem Loch je Faser (F) im expandierten Partikelschaumstoff und gegebenenfalls in der Schicht (S2), wobei sich das Loch von einer ersten Seite zu einer zweiten Seite des expandierten Partikelschaumstoffs und gegebenenfalls durch die Schicht (S2) erstreckt,

c) Bereitstellung von mindestens einer Faser (F) auf der zweiten Seite des expandierten Partikelschaumstoffs,

d) Durchführen einer Nadel von der ersten Seite des expandierten Partikelschaumstoffs durch das Loch zu der zweiten Seite des expandierten Partikelschaumstoffs und gegebenenfalls Durchführung der Nadel durch die Schicht (S2),

e) Befestigen von mindestens einer Faser (F) an der Nadel auf der zweiten Seite des expandierten Partikelschaumstoffs, und

f) Rückführen der Nadel samt Faser (F) durch das Loch, so dass die Faser (F) sich mit dem Faserbereich (FB2) innerhalb des Formkörpers befindet und von dem expandierten Partikelschaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt.

9. Paneel umfassend mindestens einen Formkörper gemäß einem der Ansprüche 1 bis 8 und mindestens eine Schicht (S1).

10. Paneel gemäß Anspruch 9, **dadurch gekennzeichnet, dass** die Schicht (S1) mindestens ein Harz umfasst.

11. Paneel gemäß Anspruch 9 oder 10, **dadurch gekennzeichnet, dass** die Schicht (S1) zusätzlich mindestens ein faserförmiges Material enthält, wobei

   i) das faserförmige Material Fasern in Form von ein oder mehreren Lagen aus Schnittfasern, Vliesen, Gelegen, Gestricken und/oder Geweben enthält, und/oder
   ii) das faserförmige Material organische, anorganische, metallische oder keramische Fasern enthält.

12. Paneel gemäß einem der Ansprüche 9 bis 11, **dadurch gekennzeichnet, dass** das Paneel zwei Schichten (S1) aufweist und die beiden Schichten (S1) jeweils an einer Seite des Formkörpers angebracht sind, die der jeweils anderen Seite im Formkörper gegenüberliegt.

13. Paneel gemäß einem der Ansprüche 9 bis 12, **dadurch gekennzeichnet, dass**

   i) der Faserbereich (FB1) der Faser (F) teilweise oder vollständig mit der ersten Schicht (S1) in Kontakt ist, und/oder
   ii) der Faserbereich (FB3) der Faser (F) teilweise oder vollständig mit der zweiten Schicht (S1) in Kontakt ist, und/oder
   iii) das Paneel zwischen mindestens einer Seite des Formkörpers und mindestens einer Schicht (S1) mindestens eine Schicht (S2) aufweist.

14. Verfahren zur Herstellung eines Formkörpers gemäß einem der Ansprüche 1 bis 8, **dadurch gekennzeichnet, dass** mindestens eine Faser (F) in den expandierten Partikelschaumstoff teilweise eingebracht wird, wodurch sich die Faser (F) mit dem Faserbereich (FB2) innerhalb des Formkörpers befindet und von dem expandierten Partikelschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt und wodurch die Faser (F) in einem Winkel $\alpha$ von 10 bis 70° relativ zur Dickenrichtung (d) des Formkörpers in den expandierten Partikelschaumstoff eingebracht ist, wobei der Faserbereich (FB1) und der Faserbereich (FB3) jeweils unabhängig voneinander 1 bis 45 % und der Faserbereich (FB2) 10 bis 98 % der Gesamtlänge der Faser (F) ausmachen, wobei zwei oder mehr Fasern (F) in einem Winkel $\beta$ zueinander in dem Formkörper vorliegen, wobei der Winkel $\beta$ im Bereich $\beta = 360°/n$ liegt, wobei n eine ganzzahlige Zahl ist und im Bereich von 2 bis 6 liegt.

15. Verfahren gemäß Anspruch 14, **dadurch gekennzeichnet, dass** das teilweise Einbringen von mindestens einer Faser (F) in den expandierten Partikelschaumstoff durch Einnähen unter Verwendung einer Nadel erfolgt.

16. Verfahren gemäß Anspruch 15, **dadurch gekennzeichnet, dass** das teilweise Einbringen der mindestens einen Faser (F) durch die Schritte a) bis f) erfolgt

   a) gegebenenfalls Aufbringen von mindestens einer Schicht (S2) auf mindestens eine Seite des expandierten Partikelschaumstoffs,
   b) Erzeugung von einem Loch je Faser (F) im expandierten Partikelschaumstoff und gegebenenfalls in der Schicht (S2), wobei sich das Loch von einer ersten Seite zu einer zweiten Seite des expandierten Partikelschaumstoffs und gegebenenfalls durch die Schicht (S2) erstreckt,
   c) Bereitstellung von mindestens einer Faser (F) auf der zweiten Seite des expandierten Partikelschaumstoffs,
   d) Durchführen einer Nadel von der ersten Seite des expandierten Partikelschaumstoffs durch das Loch zu der zweiten Seite des expandierten Partikelschaumstoffs und gegebenenfalls Durchführung der Nadel durch die Schicht (S2),
   e) Befestigen von mindestens einer Faser (F) an der Nadel auf der zweiten Seite des expandierten Partikelschaumstoffs, und
   f) Rückführen der Nadel samt Faser (F) durch das Loch, so dass die Faser (F) sich mit dem Faserbereich (FB2) innerhalb des Formkörpers befindet und von dem expandierten Partikelschaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt.

17. Verfahren zur Herstellung eines Paneels gemäß einem der Ansprüche 9 bis 13, **dadurch gekennzeichnet, dass** die mindestens eine Schicht (S1) als reaktives, viskoses Harz auf einen Formkörper gemäß einem der Ansprüche 1 bis 8 erzeugt, aufgebracht und ausgehärtet wird.

18. Verwendung eines Formkörpers gemäß einem der Ansprüche 1 bis 8 oder eines Paneels gemäß einem der Ansprüche 9 bis 13 für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

**Claims**

1. A molding made of expanded bead foam, wherein the surface of at least one side of the molding has at least one recess and wherein at least one fiber (F) is present with a fiber region (FB2) within the molding and is surrounded by the expanded bead foam, while a fiber region (FB1) of the fiber (F) projects from a first side of the molding and a fiber region (FB3) of the fiber (F) projects from a second side of the molding, where the fiber (F) has been introduced into the expanded bead foam at an angle $\alpha$ of 10° to 70° relative to the thickness direction (d) of the molding, wherein the fiber region (FB1) and the fiber region (FB3) each independently account for 1% to 45%, and the fiber region (FB2) for 10% to 98%, of the total length of the fiber (F), wherein two or more fibers (F) are present at an angle $\beta$ to one another in the molding, where the angle $\beta$ is in the range of $\beta$ = 360°/n where n is an integer and is in the range from 2 to 6.

2. The molding according to claim 1, wherein the expanded bead foam is based on at least one polymer selected from polystyrene, polyphenylene oxide, a copolymer prepared from phenylene oxide, a copolymer prepared from styrene, polysulfone, polyether sulfone, polypropylene, polyethylene, polyamide, polycarbonate, polyacrylate, polylactic acid, polyimide, polyvinylidene difluoride or a mixture thereof.

3. The molding according to claim 1 or 2, wherein

   i) the fiber (F) is a single fiber or a fiber bundle and/or
   ii) the fiber (F) is an organic, inorganic, metallic or ceramic fiber, and/or
   iii) the fiber (F) is used in the form of a fiber bundle having a number of single fibers per bundle of at least 10 and/or
   iv) the fiber region (FB1) and the fiber region (FB3) each independently account for 2% to 40% and the fiber region (FB2) for 20% to 96% of the total length of a fiber (F).

4. The molding according to any of claims 1 to 3, wherein

   i) the fiber (F) has been introduced into the expanded bead foam at an angle $\alpha$ of 30° to 60° relative to the thickness direction (d) of the molding, and/or
   ii) in the molding, the first side of the molding from which the fiber region (FB1) of the fibers (F) projects is opposite the second side of the molding from which the fiber region (FB3) of the fibers (F) projects, and/or
   iii) the molding comprises a multitude of fibers (F) and/or comprises more than 10 fibers (F) or fiber bundles per m$^2$.

5. The molding according to any of claims 1 to 4, wherein the expanded bead foam of the molding is produced by a process comprising the following steps I) to V) :

   I) producing expandable polymer beads from the corresponding polymer in the presence of a blowing agent at elevated temperature,
   II) optionally cooling and/or expanding the blowing agent-laden expandable polymer beads, optionally with expansion of the polymer beads to partly expanded polymer beads,
   III) optionally prefoaming the expandable polymer beads and/or optionally the partly expanded polymer beads at elevated temperature in the range from 95 to 150°C and/or at low pressures in the range from 1 to 5 bar in the presence of steam or of a steam/air mixture, to obtain expanded beads,
   IV) introducing the partly expanded polymer beads from step II) and/or the expanded beads from step III) into a shaping mold,

V) contacting the partly expanded polymer beads from step II) and/or the expanded beads from step III) with steam at elevated pressure in the range from 1 to 25 bar and/or elevated temperature in the range from 100 to 220°C in the shaping mold to obtain the moldings made of expanded bead foam.

6. The molding according to claim 5, **characterized in that** the beads for production of the expanded bead foam of the molding have been produced by a suspension process, a melt impregnation process, a melt expansion process or a tank expansion process.

7. The molding according to any of claims 1 to 6, wherein the total surface area of the molding is closed to an extent of more than 30%.

8. The molding according to any of claims 1 to 7, wherein the at least one fiber (F) is introduced by means of steps a) to f):

a) optionally applying at least one layer (S2) to at least one side of the expanded bead foam,
b) producing one hole per fiber (F) in the expanded bead foam and in any layer (S2), the hole extending from a first side to a second side of the expanded bead foam and through any layer (S2),
c) providing at least one fiber (F) on the second side of the expanded bead foam,
d) passing a needle from the first side of the expanded bead foam through the hole to the second side of the expanded bead foam, and passing the needle through any layer (S2),
e) securing at least one fiber (F) on the needle on the second side of the expanded bead foam, and
f) returning the needle along with the fiber (F) through the hole, such that the fiber (F) is present with the fiber region (FB2) within the molding and is surrounded by the expanded bead foam, while the fiber region (FB1) of the fiber (F) projects from a first side of the molding or from any layer (S2) and the fiber region (FB3) of the fiber (F) projects from a second side of the molding.

9. A panel comprising at least one molding according to any of claims 1 to 8 and at least one layer (S1).

10. The panel according to claim 9, wherein the layer (S1) comprises at least one resin.

11. The panel according to claim 9 or 10, wherein the layer (S1) additionally comprises at least one fibrous material, where

i) the fibrous material comprises fibers in the form of one or more laminas of chopped fibers, webs, scrims, knits and/or wovens, and/or
ii) the fibrous material comprises organic, inorganic, metallic or ceramic fibers.

12. The panel according to any of claims 9 to 11, wherein the panel has two layers (S1) and the two layers (S1) are each mounted on a side of the molding opposite the respective other side in the molding.

13. The panel according to any of claims 9 to 12, wherein

i) the fiber region (FB1) of the fiber (F) is in partial or complete contact with the first layer (S1), and/or
ii) the fiber region (FB3) of the fiber (F) is in partial or complete contact with the second layer (S1), and/or
iii) the panel has at least one layer (S2) between at least one side of the molding and at least one layer (S1).

14. A process for producing a molding according to any of claims 1 to 8, which comprises partially introducing at least one fiber (F) into the expanded bead foam, as a result of which the fiber (F) is present with the fiber region (FB2) within the molding and is surrounded by the expanded bead foam, while the fiber region (FB1) of the fiber (F) projects out of a first side of the molding and the fiber region (FB3) of the fiber (F) projects out of a second side of the molding, as a result of which the fiber (F) has been introduced into the expanded bead foam at an angle $\alpha$ of 10° to 70° relative to the thickness direction (d) of the molding, wherein the fiber region (FB1) and the fiber region (FB3) each independently account for 1% to 45%, and the fiber region (FB2) for 10% to 98%, of the total length of the fiber (F), wherein two or more fibers (F) are present at an angle $\beta$ to one another in the molding, where the angle $\beta$ is in the range of $\beta = 360°/n$ where n is an integer and is in the range from 2 to 6.

15. The process according to claim 14, wherein the at least one fiber (F) is partially introduced into the expanded bead foam by sewing it in using a needle.

16. The process according to claim 15, wherein the partial introduction of the at least one fiber (F) is effected by means of steps a) to f)

    a) optionally applying at least one layer (S2) to at least one side of the expanded bead foam,
    b) producing one hole per fiber (F) in the expanded bead foam and in any layer (S2), the hole extending from a first side to a second side of the expanded bead foam and through any layer (S2),
    c) providing at least one fiber (F) on the second side of the expanded bead foam,
    d) passing a needle from the first side of the expanded bead foam through the hole to the second side of the expanded bead foam, and passing the needle through any layer (S2),
    e) securing at least one fiber (F) on the needle on the second side of the expanded bead foam, and
    f) returning the needle along with the fiber (F) through the hole, such that the fiber (F) is present with the fiber region (FB2) within the molding and is surrounded by the expanded bead foam, while the fiber region (FB1) of the fiber (F) projects from a first side of the molding or from any layer (S2) and the fiber region (FB3) of the fiber (F) projects from a second side of the molding.

17. A process of producing a panel according to any of claims 9 to 13, which comprises producing, applying and curing the at least one layer (S1) in the form of a reactive viscous resin on a molding according to any of claims 1 to 8.

18. The use of a molding according to any of claims 1 to 8 or of a panel according to any of claims 9 to 13 for rotor blades in wind turbines, in the transport sector, in the construction sector, in automobile construction, in shipbuilding, in rail vehicle construction, for container construction, for sanitary installations and/or in aerospace.

## Revendications

1. Corps moulé composé de mousse de particules expansée, **caractérisé en ce que** la surface d'au moins un côté du corps moulé présente au moins un enfoncement et **en ce qu'**au moins une fibre (F) se trouve avec un domaine de fibre (FB2) à l'intérieur du corps moulé et est entourée par la mousse de particules expansée, tandis qu'un domaine de fibre (FB1) de la fibre (F) fait saillie depuis un premier côté du corps moulé et un domaine de fibre (FB3) de la fibre (F) fait saillie d'un deuxième côté du corps moulé, la fibre (F) étant incorporée dans la mousse de particules expansée d'un angle $\alpha$ de 10 à 70° par rapport à la direction d'épaisseur (d) du corps moulé, le domaine de fibre (FB1) et le domaine de fibre (FB3) représentant chacun indépendamment l'un de l'autre 1 à 45 % et le domaine de fibre (FB2) 10 à 98 % de la longueur totale de la fibre (F), deux fibres (F) ou plus étant présentes dans le corps moulé en un angle $\beta$ l'une par rapport à l'autre, l'angle $\beta$ se situant dans la plage $\beta = 360°/n$, n étant un nombre entier et se situant dans la plage de 2 à 6.

2. Corps moulé selon la revendication 1, **caractérisé en ce que** la mousse de particules expansée est à base d'au moins un polymère qui est choisi parmi un polystyrène, un poly(oxyde de phénylène), un copolymère préparé à partir d'oxyde de phénylène, un copolymère préparé à partir de styrène, une polysulfone, une polyéthersulfone, un polypropylène, un polyéthylène, un polyamide, un polycarbonate, un polyacrylate, un poly(acide lactique), un polyimide, un poly(difluorure de vinylidène) ou un mélange correspondant.

3. Corps moulé selon la revendication 1 ou 2, **caractérisé en ce que**

    i) la fibre (F) est une fibre individuelle ou un paquet de fibres et/ou
    ii) la fibre (F) est une fibre organique, inorganique, métallique, céramique, et/ou
    iii) la fibre (F) est utilisée en tant que paquet de fibres avec un nombre de fibres individuelles par paquet d'au moins 10 et/ou
    iv) le domaine de fibre (FB1) et le domaine de fibre (FB3) représentant chacun indépendamment l'un de l'autre 2 à 40 % et le domaine de fibre (FB2) 20 à 96 % de la longueur totale d'une fibre (F).

4. Corps moulé selon l'une quelconque des revendications 1 à 3, **caractérisé en ce que**

    i) la fibre (F) est incorporée dans la mousse de particules expansée d'un angle $\alpha$ de 30 à 60° par rapport à la direction d'épaisseur (d) du corps moulé, et/ou
    ii) dans le corps moulé, le premier côté du corps moulé depuis lequel le domaine de fibre (FB1) de la fibre (F) fait saillie, est opposé au deuxième côté du corps moulé depuis lequel le domaine de fibre (FB3) de la fibre (F) fait saillie, et/ou
    iii) le corps moulé contient une pluralité de fibre (F) et/ou comprend plus de 10 fibres (F) ou paquets de fibres

par m$^2$.

**5.** Corps moulé selon l'une quelconque des revendications 1 à 4, **caractérisé en ce que** la mousse de particules expansée du corps moulé est préparée par un procédé comprenant les étapes suivantes I) à V) :

I) préparation de particules de polymère pouvant être expansées à partir du polymère correspondant en présence d'un agent porogène à température élevée,

II) éventuellement refroidissement et/ou détente des particules de polymère pouvant être expansées, chargées d'agent porogène, éventuellement avec expansion des particules de polymère en particules de polymère partiellement expansées,

III) éventuellement prémoussage des particules de polymère pouvant être expansées et/ou éventuellement des particules de polymère partiellement expansées à température élevée dans la plage de 95 à 150 °C et/ou à pression réduite dans la plage de 1 à 5 bars en présence de vapeur d'eau ou d'un mélange vapeur d'eau/air avec obtention de particules expansées,

IV) incorporation des particules de polymère partiellement expansées de l'étape II) et/ou des particules expansées de l'étape III) dans un outil de moulage,

V) soumission des particules de polymère partiellement expansées de l'étape II) et/ou des particules expansées de l'étape III) à de la vapeur d'eau à pression élevée dans la plage de 1 à 25 bars et/ou à température élevée dans la plage de 100 à 220 °C dans l'outil de moulage avec obtention du corps moulé composé de mousse de particules expansée.

**6.** Corps moulé selon la revendication 5, **caractérisé en ce que** les particules pour la préparation de la mousse de particules expansée du corps moulé sont préparées par un procédé en suspension, un procédé d'imprégnation en fusion, un procédé d'expansion en fusion ou un procédé d'expansion en cuve.

**7.** Corps moulé selon l'une quelconque des revendications 1 à 6, **caractérisé en ce que** la surface totale du corps moulé est fermée à raison de plus de 30 %.

**8.** Corps moulé selon l'une quelconque des revendications 1 à 7, **caractérisé en ce que** l'incorporation partielle de l'au moins une fibre (F) est réalisée par les étapes a) à f)

a) éventuellement application d'au moins une couche (S2) sur au moins un côté de la mousse de particules expansée,

b) génération d'un trou par fibre (F) dans la mousse de particules expansée et éventuellement dans la couche (S2), le trou s'étendant d'un premier côté jusqu'à un deuxième côté de la mousse de particules expansée et éventuellement à travers la couche (S2),

c) placement d'au moins une fibre (F) sur le deuxième côté de la mousse de particules expansée,

d) passage d'une aiguille depuis le premier côté de la mousse de particules expansée à travers le trou jusqu'au deuxième côté de la mousse de particules expansée et éventuellement passage de l'aiguille à travers la couche (S2),

e) fixation d'au moins une fibre (F) au niveau de l'aiguille sur le deuxième côté de la mousse de particules expansée, et

f) renvoi de l'aiguille avec la fibre (F) à travers le trou, de sorte que la fibre (F) se trouve avec le domaine de fibre (FB2) à l'intérieur du corps moulé et soit entourée de la mousse de particules expansée, tandis que le domaine de fibre (FB1) de la fibre (F) fait saillie d'un premier côté du corps moulé ou éventuellement de la couche (S2) et le domaine de fibre (FB3) de la fibre (F) fait saillie d'un deuxième côté du corps moulé.

**9.** Panneau comprenant au moins un corps moulé selon l'une quelconque des revendications 1 à 8 et au moins une couche (S1).

**10.** Panneau selon la revendication 9, **caractérisé en ce que** la couche (S1) comprend au moins une résine.

**11.** Panneau selon la revendication 9 ou 10, **caractérisé en ce que** la couche (S1) contient de plus au moins un matériau sous forme de fibres,

i) le matériau sous forme de fibres contenant des fibres sous forme d'une ou plusieurs couches composées de fibres coupées, de non-tissés, de nappes, de tricots et/ou de tissus, et/ou

ii) le matériau sous forme de fibres contient des fibres organiques, inorganiques, métalliques ou céramiques.

**12.** Panneau selon l'une quelconque des revendications 9 à 11, **caractérisé en ce que** le panneau présente deux couches (S1) et les deux couches (S1) sont chacune appliquées sur un côté du corps moulé qui fait face à l'autre côté respectif dans le corps moulé.

**13.** Panneau selon l'une quelconque des revendications 9 à 12, **caractérisé en ce que**

i) le domaine de fibre (FB1) de la fibre (F) est partiellement ou totalement en contact avec la première couche (S1), et/ou
ii) le domaine de fibre (FB3) de la fibre (F) est partiellement ou totalement en contact avec la deuxième couche (S1), et/ou
iii) le panneau présente au moins une couche (S2) entre au moins un côté du corps moulé et au moins une couche (S1).

**14.** Procédé de préparation d'un corps moulé selon l'une quelconque des revendications 1 à 8, **caractérisé en ce qu'**au moins une fibre (F) est partiellement incorporée dans la mousse de particules expansée, ce par quoi la fibre (F) se trouve avec le domaine de fibre (FB2) à l'intérieur du corps moulé et est entourée par la mousse de particules expansée, tandis que le domaine de fibre (FB1) de la fibre (F) fait saillie depuis un premier côté du corps moulé et le domaine de fibre (FB3) de la fibre (F) fait saillie d'un deuxième côté du corps moulé et ce par quoi la fibre (F) est incorporée dans la mousse de particules expansée d'un angle $\alpha$ de 10 à 70° par rapport à la direction d'épaisseur (d) du corps moulé, le domaine de fibre (FB1) et le domaine de fibre (FB3) représentant chacun indépendamment l'un de l'autre 1 à 45 % et le domaine de fibre (FB2) 10 à 98 % de la longueur totale de la fibre (F), deux fibres (F) ou plus étant présentes dans le corps moulé en un angle $\beta$ l'une par rapport à l'autre, l'angle $\beta$ se situant dans la plage $\beta$ = 360°/n, n étant un nombre entier et se situant dans la plage de 2 à 6.

**15.** Procédé selon la revendication 14, **caractérisé en ce que** l'incorporation partielle d'au moins une fibre (F) dans la mousse de particules expansée est réalisée par couture en utilisant une aiguille.

**16.** Procédé selon la revendication 15, **caractérisé en ce que** l'incorporation partielle de l'au moins une fibre (F) est réalisée par les étapes a) à f)

a) éventuellement application d'au moins une couche (S2) sur au moins un côté de la mousse de particules expansée,
b) génération d'un trou par fibre (F) dans la mousse de particules expansée et éventuellement dans la couche (S2), le trou s'étendant d'un premier côté jusqu'à un deuxième côté de la mousse de particules expansée et éventuellement à travers la couche (S2),
c) placement d'au moins une fibre (F) sur le deuxième côté de la mousse de particules expansée,
d) passage d'une aiguille depuis le premier côté de la mousse de particules expansée à travers le trou jusqu'au deuxième côté de la mousse de particules expansée et éventuellement passage de l'aiguille à travers la couche (S2),
e) fixation d'au moins une fibre (F) au niveau de l'aiguille sur le deuxième côté de la mousse de particules expansée, et
f) renvoi de l'aiguille avec la fibre (F) à travers le trou, de sorte que la fibre (F) se trouve avec le domaine de fibre (FB2) à l'intérieur du corps moulé et soit entouré de la mousse de particules expansée, tandis que le domaine de fibre (FB1) de la fibre (F) fait saillie d'un premier côté du corps moulé ou éventuellement de la couche (S2) et le domaine de fibre (FB3) de la fibre (F) fait saillie d'un deuxième côté du corps moulé.

**17.** Procédé de préparation d'un panneau selon l'une quelconque des revendications 9 à 13, **caractérisé en ce que** l'au moins une couche (S1) est générée, appliquée et durcie en tant que résine réactive, visqueuse sur un corps moulé selon l'une quelconque des revendications 1 à 8.

**18.** Utilisation d'un corps moulé selon l'une quelconque des revendications 1 à 8 ou d'un panneau selon l'une quelconque des revendications 9 à 13 pour des pales de rotor dans des installations d'énergie éolienne, dans le secteur des transports, dans le secteur de la construction, dans la construction automobile, dans la construction navale, dans la construction de véhicules ferroviaires, pour la construction de containers, pour des installations sanitaires et/ou dans l'aviation et l'aérospatiale.

Fig. 1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006125561 A
- WO 2011012587 A
- WO 2012138445 A
- GB 2455044 A
- WO 2009047483 A
- US 7201625 B
- US 6767623 B
- EP 2420531 A
- WO 2005056653 A
- US 3030256 A
- US 6291049 B
- WO 2010091059 A
- WO 2013184491 A
- WO 12134878 A2

**In der Beschreibung aufgeführte Nicht-Patentliteratur**

- **PENCZEK et al.** *Advances in Polymer Science,* 2005, vol. 184, 1-95
- **PHAM et al.** *Ullmann's Encyclopedia of Industrial Chemistry,* 2012, vol. 13
- **FAHNLER.** Polyamide, Kunststoff Handbuch. 1998, vol. 3, 4
- Wiley Encyclopedia of Composites. Wiley, 2012
- **PARNAS et al.** Liquid Composite Moulding. Hanser, 2000
- **WILLIAMS et al.** *Composites Part A,* 1997, vol. 27, 517-524